# EUROPEAN PATENT APPLICATION

(11) **EP 4 711 209 A1**
(43) Date of publication of application: **18.03.2026**
(21) Application number: 25195160.4
(22) Date of filing: 11.08.2025
(51) Int. Cl.: B60R 13/02

(54) **VEHICLE PANEL AND DISASSEMBLY METHOD FOR VEHICLE PANEL**

(30) Priority: 12.09.2024 JP 2024158044
(71) Applicant: Suzuki Motor Corporation, Shizuoka 432-8611 (JP)
(72) Inventor: OI, Takanori, HAMAMATSU-SHI, 432-8611 (JP)
(74) Representative: Plasseraud IP

(57) **Abstract**

[Problem to be Solved] There are provided a vehicle panel and a disassembly method for the panel which can easily promote resin material recycling without decreasing work efficiency when the panel is manufactured.

[Solution] A panel main body 10 of a vehicle panel 100 having a surface forming a vehicle cabin Z interior or exterior design surface of a vehicle cabin Z includes a weakened portion 15 that is provided to extend from one end side of the panel main body 10 to the other end side of the panel main body 10 in the predetermined direction along the panel surface 10a of the panel main body 10. A disassembly method for the panel 100 includes a holding step of holding a portion on one side of the panel 100 with the weakened portion 15 serving as a boundary, and a turning step of turning, about the weakened portion 15, a portion on the other side with the weakened portion 15 serving as a boundary in the interior panel 100.

## Description

### [Technical Field]

The present invention relates to vehicle panels and to disassembly methods for the panels.

### [Background Art]

In general, a door trim is attached as an interior panel to a door inner panel made of a steel panel of a side door of a vehicle from a vehicle cabin interior. The door trim includes a panel main body made of a resin molded component which occupies most of the door trim, and a member attached to the panel main body to add a function of an arm rest or the like or to add decoration. Various components such as an inside door handle and a speaker are also arranged in the door trim.

As an example of door trims, there is known a door trim disclosed in Patent Literature 1. The door trim disclosed in Patent Literature 1 includes a front trim and a rear trim attached to a rear portion of the front trim, an engaging lug and a cylindrical fastening portion are formed in the rear portion of the front trim, and an engaging hole and an insertion hole are formed in the front portion of the rear trim. A distal end portion of the fastening portion is welded to the rear trim in a state in which the engaging lug in the front trim engages with the engaging hole in the rear trim and the fastening portion in the front trim is inserted into the insertion hole in the rear trim, so that the rear trim is joined to the rear portion of the front trim. That is, the panel main body (door trim main body) of the door trim is formed by engaging and welding the two divided front and rear resin molded components to and with each other. In the door trim disclosed in Patent Literature 1, various door components such as an inside door handle are arranged to be concentrated in the front trim.

### [Citation List]

### [Patent Literature]

[Patent Literature 1] JP 2013-032098 A

### [Summary of Invention]

### [Problems to be Solved by the Invention]

In recent years, it has been further required to promote recycling of resin materials from scrapped vehicles, and efforts have been made to recycle (that is, recycle resin materials) the panel main body and the like which are resin molded components occupying most of the door trim. In a case in which a method of manufacturing a panel main body in which two resin molded components engage with each other and are welded to be joined as in the door trim in Patent Literature 1 is adopted from the viewpoint of promotion of the recycling of resin materials, the recycling of resin materials can be promoted by breaking the welded portion between the front trim and the rear trim to divide the door trim main body into the rear trim and the front trim with various components when the vehicle is scrapped or the like.

However, in a structure of the door trim disclosed in Patent Literature 1, a work of engaging and welding the two resin molded components with and to each other is required to manufacture the door trim, which may cause a decrease in work efficiency when the door trim is manufactured. In vehicles, not only door trims but also roof trims and resin materials of other interior panels such as side trims around doors can be subject to recycling. Furthermore, not only resin materials of the interior panels but also resin materials of exterior panels such as bumpers of vehicles can be subjected to recycling.

An object of the present invention is to provide a vehicle panel and a disassembly method for the panel which can easily promote resin material recycling without decreasing work efficiency when the panel is manufactured.

### [Means for Solving the Problems]

According to one aspect of the present invention for achieving the object, there is provided a vehicle panel including a panel main body having a surface forming a vehicle cabin interior or exterior design surface of a vehicle. In this panel, the panel main body includes a weakened portion provided to extend from one end side of the panel main body to the other end side of the panel main body in a predetermined direction along a panel surface of the panel main body.

According to another aspect of the present invention, there is provided a disassembly method for a vehicle panel including a panel main body having a surface forming a vehicle cabin interior or exterior design surface of a vehicle. In this disassembly method, the panel main body includes a weakened portion provided to extend from one end side of the panel main body to the other end side of the panel main body in a predetermined direction along a panel surface of the panel main body, and the disassembly method includes a holding step of holding a portion on one side of the panel with the weakened portion serving as a boundary, and a breaking step of breaking the weakened portion.

### [Advantageous Effects of Invention]

According to the vehicle panel and the disassembly method for the vehicle panel according to one aspect and another aspect of the present invention, it is possible to provide a vehicle panel and a disassembly method for the vehicle panel which can easily promote recycling of resin materials without decreasing work efficiency when the panel is manufactured.

### [Brief Description of Drawings]

[Figure 1] Figure 1 is a perspective view of a panel (interior panel) according to a first embodiment of the present invention as viewed from a vehicle cabin interior.
[Figure 2] Figure 2 is a perspective view of the panel as viewed from a vehicle cabin exterior.
[Figure 3] Figure 3 is a plan view of the panel as viewed from the vehicle cabin exterior.
[Figure 4] Figure 4 is a perspective view of a panel main body of the panel as viewed from the vehicle cabin interior.
[Figure 5] Figure 5 is a partial cross-sectional view of the panel main body taken along line A-A illustrated in Figure 3.
[Figure 6] Figure 6 is an enlarged perspective view of a portion B illustrated in Figure 3.
[Figure 7] Figure 7 is an enlarged perspective view of a portion C illustrated in Figure 3.
[Figure 8] Figure 8 is a partial cross-sectional view of the panel taken along line D-D illustrated in Figure 4.
[Figure 9] Figure 9 is a flow chart for explaining the steps of a disassembly method for the panel.
[Figure 10] Figure 10 is a flow chart for explaining a cutting step of a disassembly method for the panel.
[Figure 11] Figure 11 is another diagram for illustrating the cutting step.
[Figure 12] Figure 12 is a perspective view for illustrating a holding step, a weakening step, and a breaking step of the disassembly method.
[Figure 13] Figure 13 is a cross-sectional view for illustrating the holding step, the weakening step, and a breaking step.
[Figure 14] Figure 14 is a cross-sectional view illustrating a state of the panel disassembled by the disassembly methodT
[Figure 15] Figure 15 is a plan view of a panel (exterior panel) according to a second embodiment of the present invention as viewed from the front of a vehicle.
[Figure 16] Figure 16 is a partial cross-sectional view of the panel taken along line E-E illustrated in Figure 15.
[Figure 17] Figure 17 is a partial cross-sectional view of the panel main body in a portion G illustrated in Figure 16.
[Figure 18] Figure 18 is a cross-sectional view for illustrating a holding step, a weakening step, and a breaking step of a disassembly method for the panel illustrated in Figure 15.
[Figure 19] Figure 19 is a cross-sectional view illustrating a state of the disassembled panel (exterior panel).
[Figure 20] Figure 20 is a block diagram for illustrating an apparatus used in a disassembly method for a panel according to a modified example.

### [Mode for Carrying Out the Invention]

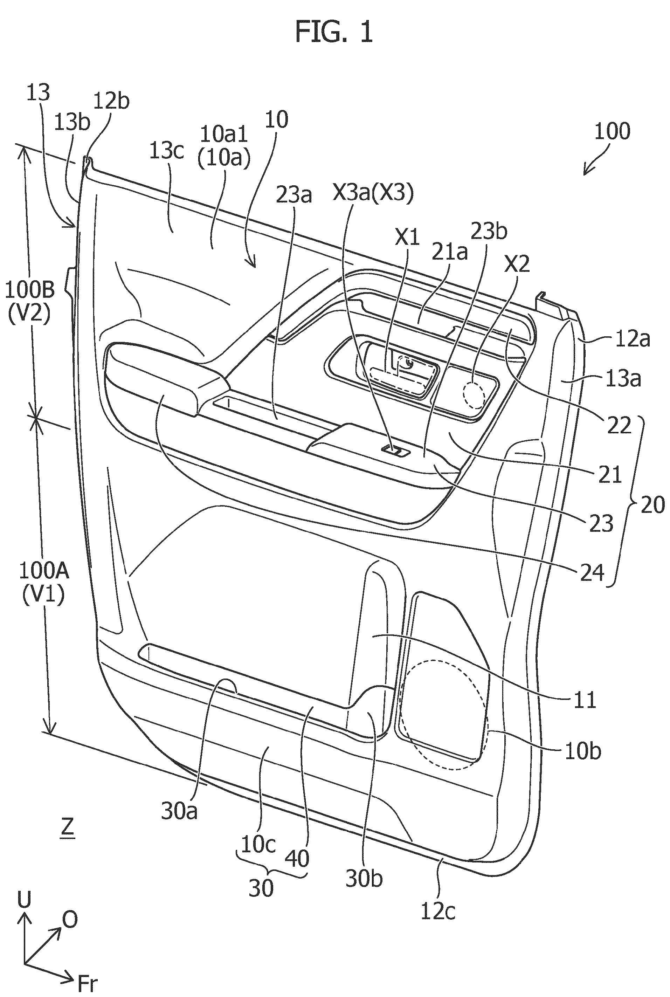

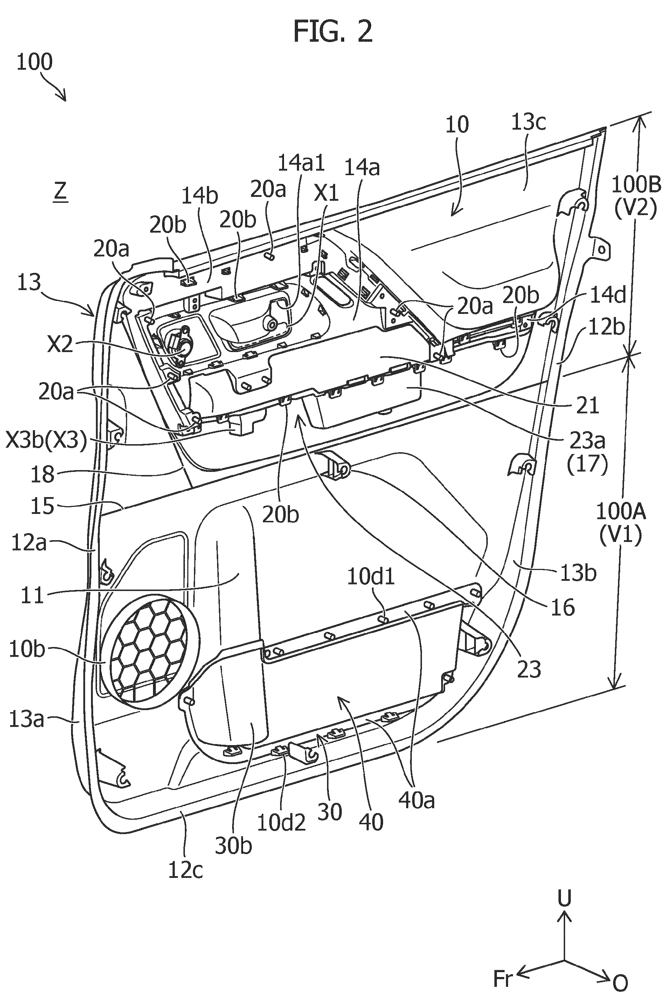

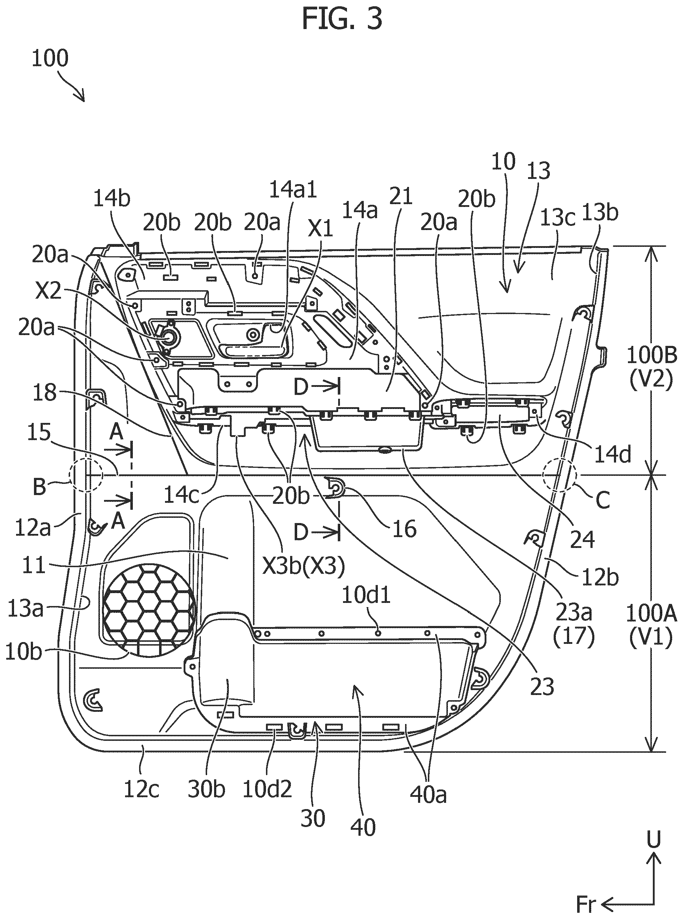

Hereinafter, embodiments of the present invention will be described with reference to the accompanying drawings. Figures 1 to 3 each are a diagram for illustrating a vehicle panel 100 according to a first embodiment of the present invention, in which Figure 1 is a perspective view as viewed from a vehicle cabin interior, Figure 2 is a perspective view as viewed from a vehicle cabin exterior, and Figure 3 is a plan view as viewed from the vehicle cabin exterior. In the figures, the direction of an arrowed line Fr indicates a vehicle frontward side in the vehicle front-rear direction, the direction of an arrowed line O indicates a vehicle outward side in the vehicle width direction, and the direction of an arrowed line U indicates a vehicle upward side in the vehicle up-down direction. In the following description, the terms "front" and "rear" correspond to front and rear in the vehicle front-rear direction, and the terms "up" and "down" correspond to up and down in the vehicle up-down direction. In the present embodiment, a case in which the vehicle panel 100 is an interior panel including a panel main body 10 having a surface forming an interior design surface 10a1 which is a design surface in a vehicle cabin Z of a vehicle will be described as an example. The vehicle includes a design surface (that is, a surface exposed to the vehicle cabin and visually recognized from the vehicle cabin interior) in the vehicle cabin Z and a design surface (that is, a surface exposed to the vehicle exterior and visually recognized from the vehicle exterior) outside the vehicle cabin Z, and the design surface in the vehicle cabin Z is referred to as the interior design surface 10a1 to distinguish the design surface in the vehicle cabin Z from the design surface outside the vehicle cabin.

Referring to Figures 1 to 3, the panel 100 for a vehicle includes the panel main body 10 facing the vehicle cabin Z of the vehicle, and is a large interior component (interior member) forming a part of the interior design surface 10a1 which is the design surface in the vehicle cabin Z of the vehicle. In the present embodiment, the panel 100 is a side door trim serving as an interior member on the vehicle cabin Z side of the side door of the vehicle. This panel 100 is attached to a door inner panel made of a steel plate (not illustrated) of the side door from the vehicle cabin interior.

**In** the present embodiment, the panel 100 includes the panel main body 10, and dissimilar material members 20 formed of materials different from that of the panel main body 10. That is, the panel 100 is formed by a plurality of members.

The panel main body 10 faces the vehicle cabin Z of the vehicle and occupies most of the panel 100. The panel main body 10 is a large panel formed into a generally rectangular shape corresponding to the door inner panel. The panel surface 10a of the panel main body 10 extends to have a large area corresponding to a size of the side door, and a surface facing the vehicle cabin Z in the panel surface 10a forms the interior design surface 10a1, and a surface on an opposite side of the interior design surface 10a1 in the panel surface 10a forms a panel back surface 10a2 facing the door inner panel side (vehicle cabin exterior).

The panel main body 10 is made of a synthetic resin material, in the example illustrated in the figures, the panel main body 10 is formed by a single resin molded component produced by injection molding. That is, the panel main body 10 is a component released, as a single resin molded component, from the metal mold when the panel main body 10 is manufactured. To be more specific, the panel main body 10 is a single large resin molded component (interior member) corresponding to the outer shape of the side door. Although not limited to a particular material, the synthetic resin material used for the panel main body 10 is, for example, polypropylene (hereinafter, simply referred to as PP). The detailed shape of the panel main body 10 will be described later.

Various components such as an inside door handle X1, an upper speaker X2, and an operation part X3 are also arranged in the door main body 10. The inside door handle X1 is attached to an upper front portion of the panel main body 10 from the vehicle cabin interior. The upper speaker X2 is attached to a front portion of the inside door handle X1 in the panel main body 10 from the vehicle cabin exterior. The upper speaker X2 is, for example, a small tweeter. The operation part X3 is attached to the back surface of an operation panel 23b made of a third dissimilar material member 23, which will be described later. The operation part X3 includes an operation switch X3a used for an opening-closing operation of a window glass (not illustrated) or the like, and a support case X3b configured to support the operation switch X3a. A lower front portion of the panel main body 10 is provided with a lower speaker disposing portion 10b. A large speaker fixed to the door inner panel (not illustrated) is fitted into the lower speaker disposing portion 10b from the panel back surface 10a2 side.

The dissimilar material members 20 are members formed of materials different from that of the panel main body 10 (here, materials different from PP), and in the example illustrated in the figures, the dissimilar material members 20 are attached to a plurality of portions in the panel main body 10. That is, in the example illustrated in the figure, a plurality of dissimilar material members 20 are attached to the panel main body 10. To be specific, each of the dissimilar material members 20 is an adding member to be attached to the panel main body 10 to add decoration to the panel main body 10 or to add a function to the panel main body 10. In the example illustrated in the figures, the plurality of dissimilar material members 20 are classified into, for example, a decorative member for adding decoration, a functional member for adding a function (a function of an arm rest, an article storage receptacle, or the like), and a decorative and functional member for adding both of the decoration and the function. To be more specific, each of the dissimilar material members 20 is a member for which a material different from the material of the panel main body 10 (in particular, a different kind of resin) is inevitably used to mainly add at least one of the decoration and the function.

In the example illustrated in the figures, a first dissimilar material member 21, a second dissimilar material member 22, the third dissimilar material member 23, and a fourth dissimilar material member 24 are attached to the panel main body 10 as the dissimilar material members 20. As the material of each of the dissimilar material members 20, a material different from the material of the panel main body 10 is used according to the purpose (decoration, function).

The first dissimilar material member 21 is a member that decorates a peripheral portion of the inside door handle X1 in the panel main body 10, that is, a decorative member at the periphery of the handle. In a portion on the rear side in a generally upper half of the panel main body 10, the first dissimilar material member 21 is attached to cover the peripheral portion of the inside door handle X1 from the vehicle cabin Z side. The first dissimilar material member 21 is formed to surround the peripheries of the inside door handle X1 and the upper speaker X2 as viewed from the vehicle cabin Z side. In the example illustrated in the figures, an upper storage receptacle for articles 21a opened upward of the vehicle is formed in an upper portion of the first dissimilar material member 21. That is, the first dissimilar material member 21 has a function of the article storage receptacle and also serves as the functional member. Here, the first dissimilar material member 21 is made of, for example, a synthetic resin material, and is formed by a single resin molded component. Although not limited to a particular material, the synthetic resin material used for the first dissimilar material member 21 is, for example, acrylonitrile-butadiene-styrene (hereinafter, simply referred to as ABS) or polycarbonate (hereinafter, simply referred to as PC).

The second dissimilar material member 22 is a member that decorates an upper portion of the panel main body 10 above the first dissimilar material member 21, that is, an upper decorative member. Above the first dissimilar material member 21, the second dissimilar material member 22 is attached to the upper portion of the panel main body 10 from the vehicle cabin Z side. In the example in the figure, the second dissimilar material member 22 extends from a front portion of an upper edge of the panel main body 10 to a middle portion of the upper edge toward the rear of the vehicle, and is bent obliquely rearward to the lower side of the vehicle from the middle portion of the upper edge. The second dissimilar material member 22 is made of, for example, a synthetic resin material, and is formed by a single resin molded component. Although not limited to a particular material, the synthetic resin material used for the second dissimilar material member 22 is, for example, ABS or PC.

The third dissimilar material member 23 is a member for forming a middle storage receptacle for articles 23a and the operation panel 23b for arranging a switch below the first dissimilar material member 21, that is, an article storage receptacle and operation panel forming member (to be more specific, a functional member). Below the first dissimilar material member 21, the third dissimilar material member 23 is attached to the panel main body 10 from the vehicle cabin Z side. In the example illustrated in the figures, the third dissimilar material member 23 extends reward of the vehicle from the front portion of the panel main body 10 along a lower end of the first dissimilar material member 21. The third dissimilar material member 23 includes an upper wall facing an upward direction of the vehicle in the vehicle cabin Z, the middle storage receptacle for articles 23a is formed integrally with a portion on a rear side of the upper wall, and the operation panel 23b is formed by a portion on a front side of the upper wall. The operation portion X3 is attached to a back surface of the operation panel 23b, and the lever-like operation switch X3a is operably arranged through an operation hole opened in the operation panel 23b. The third dissimilar material member 23 is made of, for example, a synthetic resin material, and is formed by a single resin molded component. Although not limited to a particular material, the synthetic resin material used for the third dissimilar material member 23 is, for example, ABS or PC.

Rearward of the third dissimilar material member 23, the fourth dissimilar material member 24 is a member functioning as an elbow rest, that is, an arm rest having cushion properties (to be more specific, a functional member). The fourth dissimilar material member 24 is located adjacent to a rear end of the third dissimilar material member 23, and extends from the rear end of the third dissimilar material member 23 to a rear portion of the panel main body 10. The fourth dissimilar material member 24 is made of, for example, a synthetic resin material. The fourth dissimilar material member 24 is, for example, a composite member comprising a resin molded component made of a synthetic resin material such as ABS and a skin member covering the resin molded component. The synthetic resin material used for the skin member is, for example, polyurethane (PU).

In the present embodiment, an article storage pocket 30 which is opened upward of the vehicle and in which articles can be stored is formed in a lower portion of the panel 100 on the vehicle cabin Z side. The article storage pocket 30 is formed by the panel main body 10 and a pocket forming member 40 from the viewpoint of moldability of the panel main body 10, for example. In the example illustrated in the figures, the pocket forming member 40 is attached to the lower portion of the panel main body 10 from the panel back surface 10a2 side, so that the article storage pocket 30 is formed. To be specific, the article storage pocket 30 extends in the front-rear direction of the vehicle and is opened upward of the vehicle.

An inside wall of the article storage pocket 30 on the vehicle cabin Z side is formed by a lower interior wall 10c of the panel main body 10, and an outer wall, a bottom wall, a front wall, and a rear wall of the article storage pocket 30 are formed by the pocket forming member 40. The pocket forming member 40 is made of, for example, a synthetic resin material, and is formed by a single resin molded component. The synthetic resin material used for the pocket forming member 40 is, for example, the same kind of PP as that of the panel main body 10.

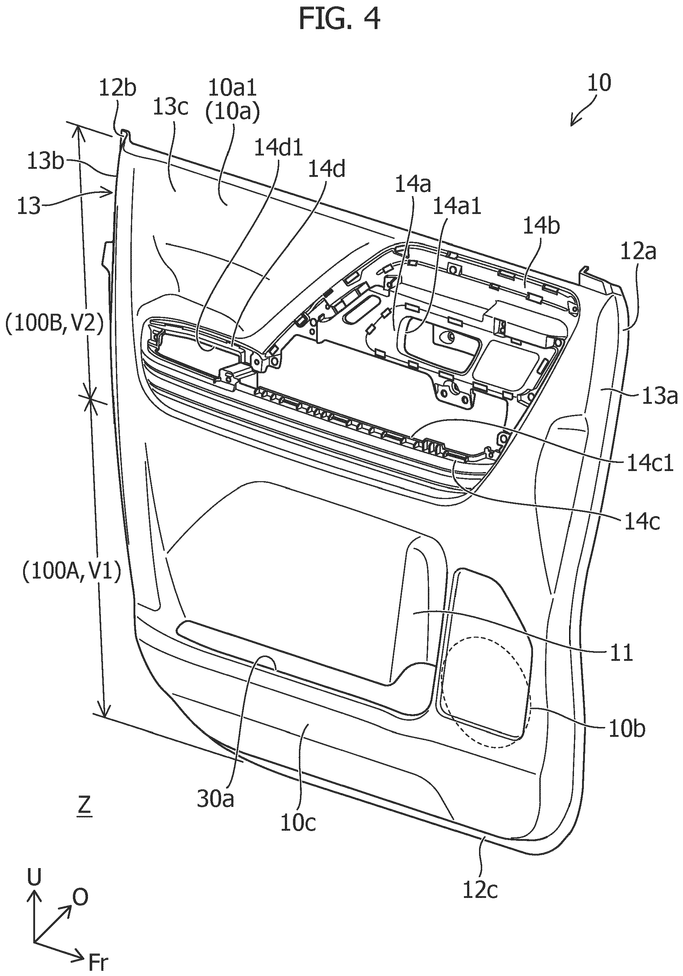

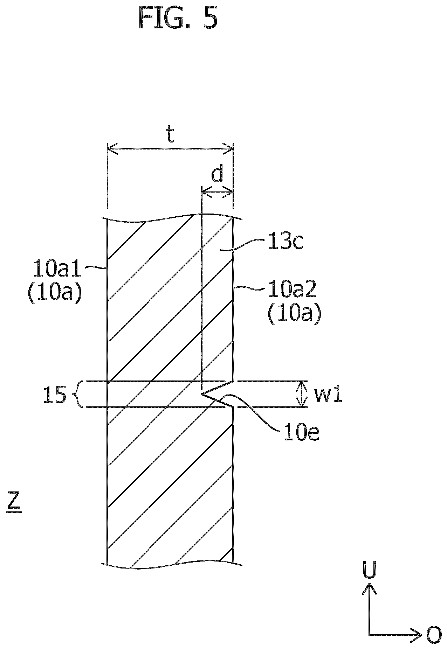

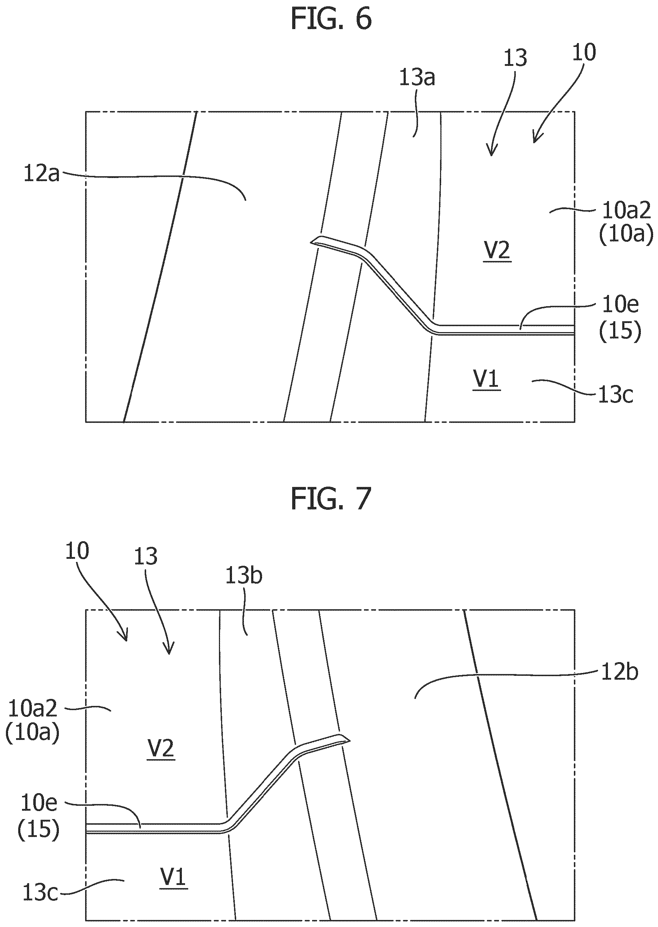

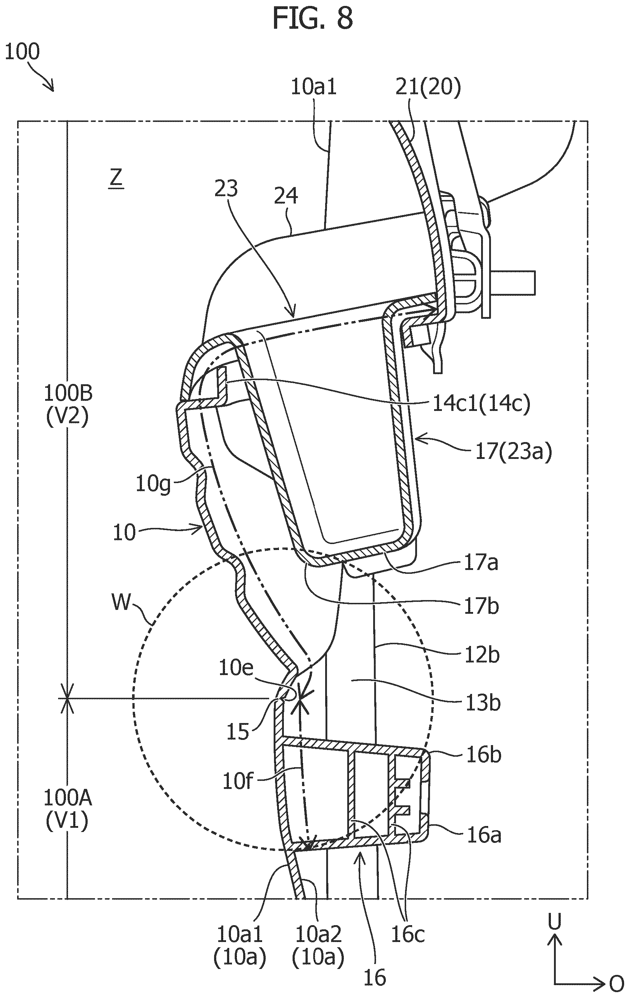

Next, the panel 100 will be described in detail with reference to Figures 1 to 8. Figure 4 is a perspective view of the panel main body 10 as viewed from the vehicle cabin interior, Figure 5 is a partial cross-sectional view of the panel main body 10 taken along line A-A illustrated in Figure 3, Figure 6 is an enlarged perspective view of a portion B illustrated in Figure 3, Figure 7 is an enlarged perspective view of a portion C illustrated in Figure 3, and Figure 8 is a partial cross-sectional view of the panel 100 taken along line D-D illustrated in Figure 4.

Referring to Figures 1 to 4, in the present embodiment, the panel main body 10 includes a first flange portion 12a, a second flange portion 12b, a lower flange portion 12c, and a main body portion 13.

The first flange portion 12a is a flange forming an edge portion on one end side in the panel main body 10 in a predetermined direction along the panel surface 10a of the panel main body 10. The second flange portion 12b is a flange forming an edge portion on the other end side in the panel main body 10 in the predetermined direction along the panel surface 10a of the panel main body 10. In the example illustrated in the figures, the panel main body 10 is a panel having a generally rectangular contour in which a longitudinal direction is parallel to the vehicle front-rear direction. In the present embodiment, the predetermined direction along the panel surface 10a corresponds to the vehicle front-rear direction. Although not particularly limited to the following description, the edge portion on one end side in the panel main body 10 in the predetermined direction corresponds to a front edge portion in the panel main body 10, and the edge portion on the other end side corresponds to a rear edge portion in the panel main body 10. That is, in the example illustrated in the figures, the first flange portion 12a corresponds to the front edge portion of the panel main body 10, the second flange portion 12b corresponds to the rear edge portion of the panel main body 10, and each flange portion (12a, 12b) extends generally in the vehicle up-down direction. In addition, in the example illustrated in the figures, the panel main body 10 also includes the lower flange portion 12c that connects a lower end of the first flange portion 12a and a lower end of the second flange portion 12b.

The main body portion 13 connects the first flange portion 12a and the second flange portion 12b and bulges in a panel thickness direction. In the example illustrated in the figures, the main body portion 13 bulges toward the vehicle cabin side in the panel thickness direction (here, in a direction away from the door inner panel, and to be more specific, inward in the vehicle width direction). The main body portion 13 includes a first vertical wall 13a that is connected to the first flange portion 12a and a second vertical wall 13b that is connected to the second flange portion 12b. Each vertical wall (13a, 13b) extends in the vehicle up-down direction and the vehicle width direction. The main body portion 13 includes a main body wall 13c that connects an inner end of the first vertical wall 13a in the vehicle width direction and an inner end of the second vertical wall 13b in the vehicle width direction. The main body wall 13c is a main wall that occupies most of the panel main body 10, in other words, a bulged bottom wall.

In the main body wall 13c of the main body portion 13, a generally upper half with a generally center portion in the up-down direction serving as a boundary bulges toward the vehicle cabin exterior (in other words, outward in the vehicle width direction). In addition, in a generally lower half with the center portion of the main body wall 13c of the main body portion 13 serving as a boundary, an upper portion than the article storage pocket 30 bulges toward the vehicle cabin exterior. A bulged portion in the upper half is formed with a first attaching portion 14a to which the first dissimilar material member 21 is attached, a second attaching portion 14b to which the second dissimilar material member 22 is attached, a third attaching portion 14c to which the third dissimilar material member 23 is attached, and a fourth attaching portion 14d to which the fourth dissimilar material member 24 is attached. The attaching portions (14a, 14b, 14c, and 14d) are provided with engagement portions such as engaging holes for engaging with cylindrical fastening portions 20a and engaging lugs 20b that are formed in the dissimilar material members 20 corresponding to the respective attaching portions. The first attaching portion 14a has a handle hole 14a1 opened to dispose the inside door handle X1. An upper portion of the second attaching portion 14b is offset to the vehicle cabin exterior with respect to the first attaching portion 14a. The third attaching portion 14c has a middle opening 14c1 opened, the middle opening 14c1 being closed by the third dissimilar material member 23. The fourth attaching portion 14d has a front opening 14d1 opened, the front opening 14d1 being closed by the fourth dissimilar material member 24.

A lower interior wall 10c that forms the inside wall of the article storage pocket 30 in the panel main body 10 bulges toward the vehicle cabin interior. A part of the pocket opening 30a of the article storage pocket 30 is opened in the panel main body 10. A peripheral edge portion of the pocket forming member 40 is formed with a flange 40a having engaging holes for engaging with cylindrical fastening portions 10d1 and engaging lugs 10d2 that are formed in the panel main body 10. The pocket forming member 40 is engaged to the panel main body 10 from the panel back surface 10a2 side via the flange 40a. A front portion of the outer wall of the article storage pocket 30 (in the example illustrated in the figures, the pocket forming member 40) includes a pocket bulged portion 30b that bulges toward the vehicle cabin exterior and has a circular arc cross section to extend in the up-down direction. An extending bulged portion 11 that bulges to continue to the pocket bulged portion 30b is formed in the panel main body 10, so that a large and long article can be stored in a standing state in the front portion of the article storage pocket 30. The rigidity of the front portion of the lower half of the panel main body 10 can be increased by the pocket bulged portion 30b and the extending bulged portion 11.

Here, referring to Figures 2, 3, and 5, the panel main body 10 includes a weakened portion 15. The weakened portion 15 is provided to extend from one end side of the panel main body 10 to the other end side of the panel main body 10 in the predetermined direction along the panel surface 10a of the panel main body 10. In the present embodiment, the predetermined direction along the panel surface 10a corresponds to the vehicle front-rear direction. Accordingly, the weakened portion 15 is provided to extend from the front end side of the panel main body 10 to the rear end side of the panel main body 10. That is, the weakened portion 15 is provided to continuously or intermittently extend from a predetermined portion on the front end side of the panel main body 10 to a predetermined portion on the rear end side of the panel main body 10.

In the present embodiment, the weakened portion 15 extends linearly and continuously in the vehicle front-rear direction while having a predetermined width. In the example illustrated in the figures, the weakened portion 15 extends in the vehicle front-rear direction at a generally center height position of the panel main body 10 in the vehicle up-down direction.

The panel 100 is divided into a first panel portion 100A and a second panel portion 100B with the weakened portion 15 serving as a boundary. In the example illustrated in the figures, the panel 100 is divided into upper and lower half portions with the weakened portion 15 serving as a boundary. Although not particularly limited to the following description, here, the lower half portion of the panel 100 corresponds to the first panel portion 100A, and the upper half portion of the panel 100 corresponds to the second panel portion 100B.

Referring to Figures 2, 3, and 5 to 7, in the present embodiment, the weakened portion 15 is formed in the main body portion 13 of the panel main body 10. That is, the weakened portion 15 is not formed in the first flange portion 12a and the second flange portion 12b. In the example illustrated in the figures, the weakened portion 15 extends continuously and linearly via an end portion on the first flange portion side of the first vertical wall 13a, an end portion on the main body wall side of the first vertical wall 13a, a front end of the main body wall 13c, a rear end of the main body wall 13c, an end portion on the main body wall side of the second vertical wall 13b, and an end portion on the second flange portion side of the second vertical wall 13b.

Referring to Figure 5, in the present embodiment, the weakened portion 15 is formed into a thin shape having a thickness thinner than a thickness t of the panel around the weakened portion 15. That is, the weakened portion 15 is formed by a thin portion formed to have a thickness thinner than that of a portion around (peripheral portion of) the weakened portion 15, and is formed by providing a thin portion in a part of the panel main body 10. Accordingly, the weakened portion 15 is a weak portion having bending rigidity lower than the bending rigidity of the peripheral portion having a thickness thicker than that of the weakened portion 15. In the present embodiment, the weakened portion 15 is disposed close to the interior design surface 10a1 in the panel thickness direction. That is, a portion on the design surface side (here, the interior design surface 10a1 side, and to be more specific, the vehicle cabin interior) of the weakened portion 15 is formed to be flat without roughness with respect to the design surface (here, the interior design surface 10a1) around the weakened portion 15. In the example illustrated in the figure, a bending promotion groove 10e that is a groove recessed in the panel thickness direction is formed in the panel back surface 10a2 of the panel main body 10, so that the weakened portion 15 is formed into a thin shape having a thickness thinner than the thickness t of the panel around the weakened portion 15. The panel 100 has a structure which makes it easy to bend the panel 100 about (with an origin of) the weakened portion 15. Note that the bending promotion groove 10e is formed when the panel main body 10 is injection-molded. However, the bending promotion groove 10e may be formed by a groove forming process after the injection molding.

In the example illustrated in the figure, the bending promotion groove 10e is formed as a V-shaped groove having a V-shaped cross section. However, the groove cross-sectional shape is not limited to a V shape, and may be formed into a suitable shape such as a U shape. To be specific, a groove width w1 of the bending promotion groove 10e (in other words, a line width of the weakened portion 15) is set to approximately 25% of the panel thickness t, and a groove depth d of the bending promotion groove 10e is also set to approximately 25% of the panel thickness t. When the panel thickness t is, for example, 2 mm, the groove width w1 (line width of the weakened portion 15) is generally 0.5 mm, the groove depth d is generally 0.5 mm, and the thickness of the weakened portion 15 in the panel thickness direction is generally 1.5 mm. Such a dimensional relationship makes it possible to reduce the recess around the interior design surface 10a1 of the weakened portion 15 caused by a difference between the shrinkage ratio of the weakened portion 15 and the shrinkage ratio of its periphery during resin molding.

Here, as described above, a plurality of dissimilar material members 20 (21, 22, 23, and 24) formed by different materials from the material of the panel main body 10 are arranged in the panel main body 10. Referring to Figure 1, the plurality of dissimilar material members 20 (21, 22, 23, and 24) are arranged in a localized region in the panel main body 10. In the example illustrated in the figure, the plurality of dissimilar material members 20 are arranged so as to be localized in the generally upper half region of the panel main body 10. In other words, the plurality of dissimilar material members 20 are arranged so as to be localized in the second panel portion 100B and are not arranged in the first panel portion 100A.

The weakened portion 15 is provided to divide the panel main body 10 into a localized region V2 in which the dissimilar material members 20 are arranged and a delocalized region V1 on the opposite side of the localized region V2 side. To be specific, the weakened portion 15 extends linearly to cross the panel main body 10 in the vehicle front-rear direction at the generally center height position of the panel main body 10 in the vehicle up-down direction, thereby dividing the panel 100 (panel main body 10) into the first panel portion 100A and the second panel portion 100B. As a result, the weakened portion 15 divides the panel main body 10 into the localized region V2 and the delocalized region V1.

In the present embodiment, the panel main body 10 includes a weakened split portion 18 to further divide the panel main body 10. The weakened split portion 18 extends from a predetermined intermediate position of the weakened portion 15 in the longitudinal direction toward a predetermined portion side of an outer edge of the panel main body 10. In the example illustrated in the figures, the weakened portion 15 extends in the vehicle front-rear direction, and the weakened split portion 18 is provided to continuously or intermittently extend from the intermediate position of the weakened portion 15 in the vehicle front-rear direction corresponding to a lower portion of the front end of the third dissimilar material member 23 in the vehicle front-rear direction of the weakened portion 15 toward an upper end of the first flange portion 12a.

To be specific, the weakened split portion 18 linearly and continuously extends obliquely upward with respect to the weakened portion 15. In the example illustrated in the figures, the weakened split portion 18 branches off from the weakened portion 15, and extends along the main body wall 13c and the first vertical wall 13a and extends to the vicinity of the upper end of the first flange portion 12a. Similarly to the weakened portion 15, the weakened split portion 18 is formed into a thin shape having a thickness thinner than the thickness t of the panel around the weakened split portion 18, and the portion on the interior design surface 10a1 of the weakened split portion 18 is formed to be flat without roughness with respect to the interior design surface 10a1 around the weakened split portion 18. Similarly to the weakened portion 15, a bending promotion groove that is recessed in the panel thickness direction is formed in the panel back surface 10a2 of the panel main body 10, so that the weakened split portion 18 is formed into a thin shape. The panel 100 has a structure which makes it easy to bend the panel 100 about the weakened split portion 18.

In the present embodiment, the weakened split portion 18 extends in a direction intersecting the weakened portion 15 at a position keeping away from the dissimilar material members 20 in the localized region V2 (here, the second panel portion 20B) of the panel main body 10 to further divide the localized region V2 (second panel portion 20B). To be specific, in the example illustrated in the figures, a front portion of the upper half of the panel main body 10 includes a triangular region in which the dissimilar material members 20 are not arranged. The weakened split portion 18 extends along a rear edge of the triangular region.

Next, referring to Figure 8, in the present embodiment, the first panel portion 100A is provided with a first protrusion portion 16 that protrudes from the panel surface 10a, and the second panel portion 100B is provided with a second protrusion portion 17 that protrudes from the panel surface 10a.

To be specific, each protrusion portion (16, 17) protrudes outward in the panel thickness direction from the panel back surface 10a2 in the vicinity of the weakened portion 15. In the example illustrated in the figure, the first protrusion portion 16 is formed integrally with the panel main body 10, and the second protrusion portion 17 is formed separately from the panel main body 10 to be attached to the panel main body 10. The first protrusion portion 16 has a trapezoidal contour, and the second protrusion portion 17 has a cross sectional shape that is opened upward of the vehicle and is recessed downward of the vehicle. In the example illustrated in the figure, the first protrusion portion 16 is a clip seat provided in the panel main body 10. In addition, the second protrusion portion 17 is formed by the middle storage receptacle for articles 23a made of the third dissimilar material member 23 that is attached to the panel main body 10 (third attaching portion 14c).

Each of the first protrusion portion 16 and the second protrusion portion 17 has a generally trapezoidal contour. A protruding end surface 16a at a distal end of the first protrusion portion 16 in a protruding direction faces the outside in the vehicle width direction (the door inner panel side, the vehicle cabin exterior), and a protruding end surface 17a at a distal end of the second protrusion portion 17 in the protruding direction faces generally downward of the vehicle. The protrusion portions (16 and 17) include interior corner portions (16b and 17b) on the distal end side in the protruding direction and the weakened portion side, respectively. That is, the interior corner portion 16b is a corner portion formed by the intersection between the vertical wall on the weakened portion side of the first protrusion portion 16 and the protruding end surface 16a, and the interior corner portion 17b is a corner portion formed by the intersection between the vertical wall on the weakened portion side of the second protrusion portion 17 and the protruding end surface 17a.

In the present embodiment, the first protrusion portion 16 and the second protrusion portion 17 are located on a virtual circle W about the weakened portion 15, as illustrated in Figure 8. That is, when the panel 100 is bent about (with an origin of) the weakened portion 15, the first protrusion portion 16 and the second protrusion portion 17 are arranged to collide with each other.

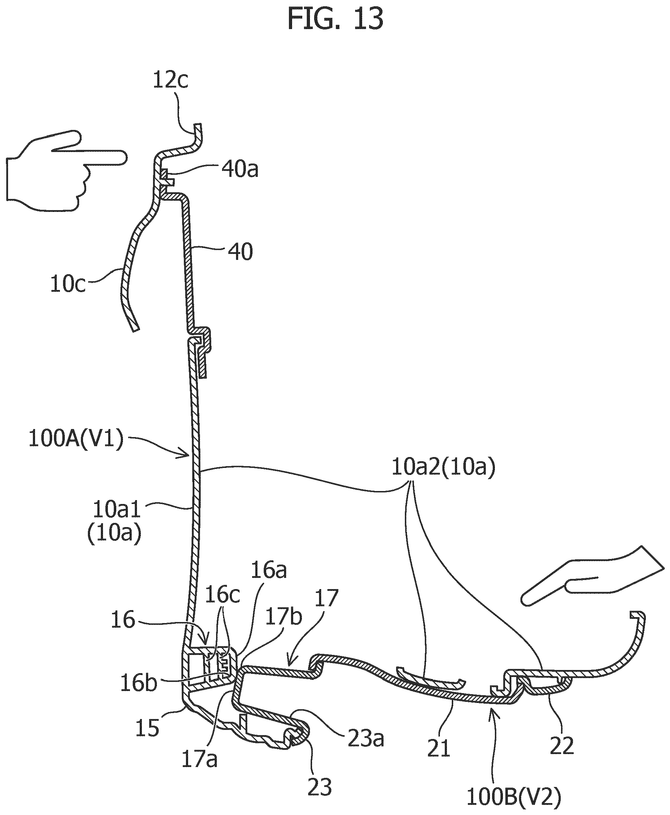

In the present embodiment, the interior corner portion 16b of one (in the example illustrated in the figure, the first protrusion portion 16) of the first protrusion portion 16 and the second protrusion portion 17 and the protruding end surface 17a of the other (in the example illustrated in the figure, the second protrusion portion 17) of the first protrusion portion 16 and the second protrusion portion 17 are located on the virtual circle W. Accordingly, when the panel main body 10 (the panel 100) is bent about (with an origin of) the weakened portion 15, and the first protrusion portion 16 and the second protrusion portion 17 collide with each other, the first protrusion portion 16 and the second protrusion portion 17 protrude in a direction intersecting each other, causing contact between the surface and the corner, as illustrated in Figure 13, which will be described later.

In the present embodiment, the first panel portion 100A includes a first peripheral portion 10f extending from a proximal end portion of the first protrusion portion 16 to the weakened portion 15, and the second panel portion 100B includes a second peripheral portion 10g extending from a proximal end portion of the second protrusion portion 17 to the weakened portion 15. Then, one (in the example illustrated in the figure, the second peripheral portion 10g) of the first peripheral portion 10f and the second peripheral portion 10g is bent in the panel thickness direction. In the example illustrated in the figure, the first peripheral portion 10f is formed by the main body wall 13c of the main body portion 13 of the panel main body 10, and the second peripheral portion 10g is formed by the main body wall 13c and an upper wall of the third dissimilar material member 23.

In the present embodiment, the rigidity in the protruding direction of one (in the example illustrated in the figure, the first protrusion portion 16) of the first protrusion portion 16 and the second protrusion portion 17 is set to be higher than the rigidity in the protruding direction of the other (the second protrusion portion 17) of the first protrusion portion 16 and the second protrusion portion 17. To be specific, a reinforcement rib 16c is provided inside the first protrusion portion 16. A protruding length of the first protrusion portion 16 is shorter than a protruding length of the second protrusion portion 17. That is, the rigidity in the protruding direction of the clip seat serving as the first protrusion portion 16 is higher than the rigidity in the protruding direction of the middle storage receptacle for articles 23a of the third dissimilar material member 23.

In the panel 100 configured as described above, the dissimilar material members 20 (21, 22, 23, and 24) engage with the panel main body 10 via the fastening portions 20a and the engaging lugs 20b, as described above. To be specific, the engaging lugs 20b engage with the panel main body 10 or the like, and the fastening portions 20a are joined to the panel main body 10 by being fastened with metal fasteners (for example, bolts) or are melted to be welded to the panel main body 10, so that the dissimilar material members 20 are joined to the panel main body 10. Accordingly, much time and effort are required to detach the plurality of dissimilar material members 20 attached to the panel main body 10 in the second panel portion 100B from the panel main body 10.

In the second panel portion 100B, the inside door handle X1, the upper speaker X2, and metallic fasteners for fixing these components (X1 and X2) are arranged inside the first dissimilar material member 21, each being made of a material different from the material of the panel main body 10. The operation switch X3a, the metallic fastener, the wiring wire, and the like are arranged in the support case X3b of the third dissimilar material member 23, each being made of a material different from the material of the panel main body 10. Accordingly, the second panel portion 100B is formed by members and components of various kinds and materials such as PP, ABS, PC, PU, metal, and a wiring material. In addition, much time and effort are required to separate (disassemble) the panel main body 10 from the other members (components) in the second panel portion 100B. In contrast, the first panel portion 100A is formed only by the panel main body 10 and the pocket forming member 40 that are made of the same kind of resin (PP). Accordingly, from the viewpoint of workability of recycling of resin materials, the panel 100 is disassembled using the disassembly method which will be described below, and the first panel portion 100A is separated from the panel 100, so that the resin material recycling can be efficiently promoted.

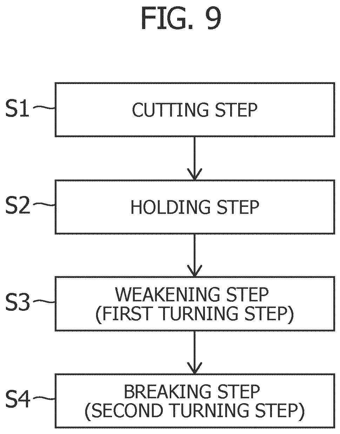

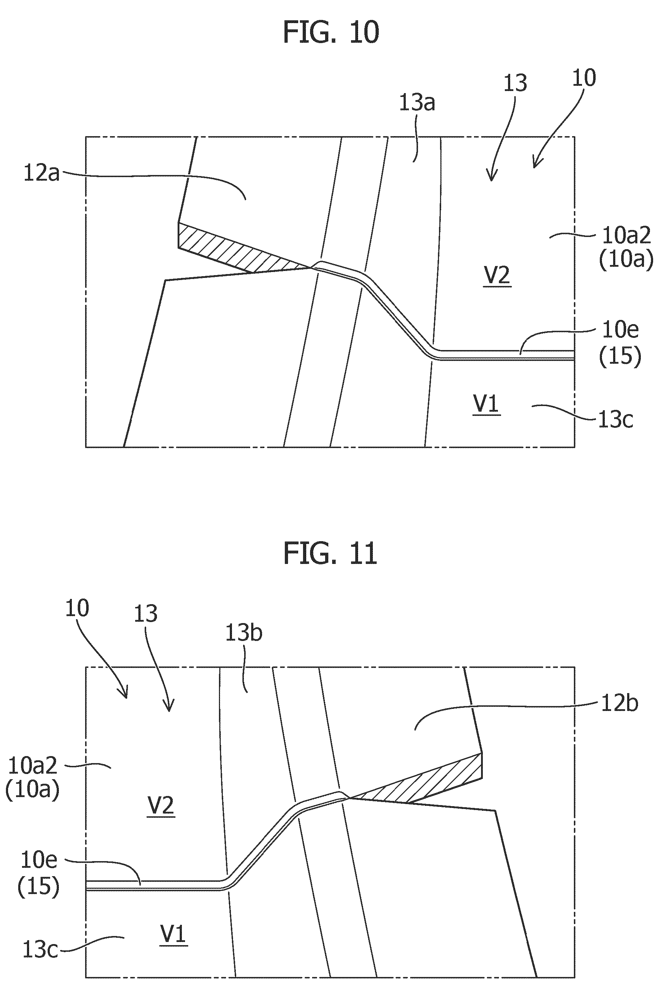

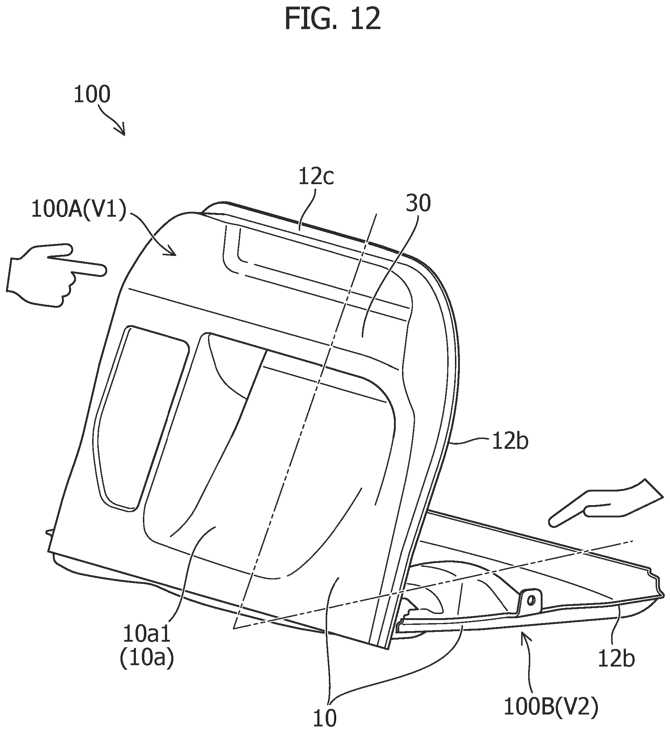

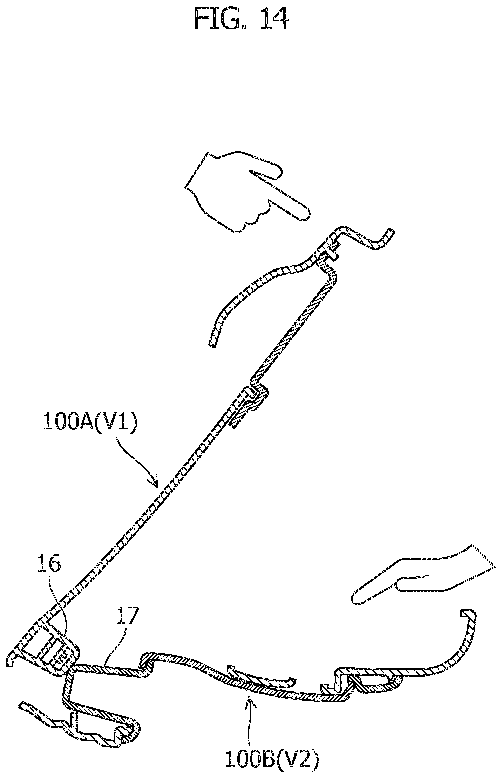

Next, the disassembly method for the panel 100 according to the first embodiment of the present invention will be described with reference to Figures 9 to 14. Figures 9 to 13 each are a diagram for explaining the steps (processes, procedure) of the disassembly method for the panel 100. Figure 9 is a schematic flow chart for explaining the steps of the disassembly method for the panel 100. Figures 10 and 11 each illustrate an example of a cutting step S1, which will be described later, and Figures 12 and 13 each illustrate an example of a holding step S2, a weakening step S3, and a breaking step S4, which will be described later. Figure 14 is a cross-sectional view illustrating an example of a state of the panel 100 disassembled by the disassembly method. Note that the panel 100 has already been detached from the door inner panel.

The disassembly method for the panel 100 is a disassembly method for the panel 100 which is an interior panel including the panel main body 10 having the interior design surface 10a1 of the vehicle. A component to be disassembled by the disassembly method is the above-described panel 100. That is, the panel main body 10 includes the above-described weakened portion 15 and weakened split portion 18. Referring to Figure 9, in the present embodiment, the disassembly method includes the cutting step S1, the holding step S2, the weakening step S3, and the breaking step S4.

As illustrated in Figures 10 and 11, in the cutting step S1, a portion adjacent to the end portion of the weakened portion 15 in an edge portion (front edge portion) on one end side of the panel main body 10 in a predetermined direction along the panel surface 10a (longitudinal direction of the panel main body 10, the vehicle front-rear direction in use of the panel 100) (see Figure 10) and a portion adjacent to the end portion of the weakened portion 15 in an edge portion (rear edge portion) on the other end side of the panel main body 10 in the predetermined direction (see Figure 11) are cut.

In the present embodiment, in the cutting step S1, a portion adjacent to the end portion of the weakened portion 15 in the first flange portion 12a (see Figure 10) and a portion adjacent to the end portion of the weakened portion 15 in the second flange portion 12b (see Figure 11) are cut. To be specific, the cutting step S1 is executed manually by a worker using a cutting tool such as scissors, for example. In the cutting step S1, a V-shaped cut is made in the portion adjacent to the end portion of the weakened portion 15 in each flange portion (12a, 12b).

As illustrated in Figures 12 and 13, in the holding step S2, a portion on one side of the panel 100 with the weakened portion 15 serving as a boundary (in the example illustrated in the figures, the second panel portion 100B, and in other words, the localized region V2 in the panel main body 10) is held at a predetermined position. To be specific, the holding step S2 is executed manually by a hand or a foot of the worker or by the worker via a holding tool (in the example illustrated in the figures, by a hand).

Then, the weakening step S3 is a step of further weakening the weakened portion 15 in the panel 100. In the weakening step S3, for example, a portion on the other side of the panel 100 with the weakened portion 15 as a breaking line serving as a boundary (in the example illustrated in the figures, the first panel portion 100A, and in other words, the delocalized region V1 in the panel main body 10) is turned about (with an origin of) the weakened portion 15. To be specific, as illustrated in Figures 12 and 13, the weakening step S3 is manually executed by human power of the worker, for example.

To be specific, the weakening step S3 is a step of turning the first panel portion 100A to further weaken the weakened portion 15. To be specific, in the weakening step S3, for example, the first panel portion 100A is turned with an origin of (about) the weakened portion 15 so as to be folded back in a direction approaching the panel back surface 10a2 of the second panel portion 100B or a direction approaching the interior design surface 10a1 of the second panel portion 100B. In the weakening step S3, the first panel portion 100A may be reciprocated a plurality of times in the direction approaching the panel back surface 10a2 of the second panel portion 100B and the direction approaching the interior design surface 10a1 of the second panel portion 100B and be folded back. In the weakening step S3, the stress is repeatedly concentrated on the periphery of the weakened portion 15 by foldback turning at the stage before the weakened portion 15 is broken, so that the weakened portion 15 is further weakened. That is, in the weakening step S3, a load which does not allow the breakage of the weakened portion 15 is applied to the weakened portion 15.

Then, the breaking step S4 is a step of breaking the weakened portion 15 in the panel 100. In the breaking step S4, in the example illustrated in the figures, the first panel portion 100A is turned in the direction approaching the panel back surface 10a2 of the second panel portion 100B, and the interior corner portion 16b of the first protrusion portion 16 is brought into contact with the protruding end surface 17a of the second protrusion portion 17. In this contact state, the first panel portion 100A is further turned about the interior corner portion 16b as a pivotal point, so that a force for breaking the weakened portion 15 is generated by the principle of leverage. Note that, in the present embodiment, each of the weakening step S3 and the breaking step S4 includes turning operation, and can be referred to as a turning step. In addition, in the example illustrated in the figures, the breaking step S4 is a step of breaking the weakened portion 15 further weakened in the weakening step S3.

Then, in the example illustrated in the figures, the panel 100 is broken at the weakened portion 15 in the breaking step S4, and as illustrated in Figure 14, the panel 100 is divided into the first panel portion 100A and the second panel portion 100B. Thus, the panel 100 is separated into the first panel portion 100A made of PP and the second panel portion 100B made of various kinds and materials. The first panel portion 100A is then pelletized and is distributed as a recycled PP material.

In the present embodiment, the second panel portion 100B with a plurality of dissimilar material members is further separated with the weakened split portion 18 serving as a boundary. To be specific, although not illustrated, the cutting step S1, the holding step S2, the weakening step S3, and the breaking step S4 are executed with respect to the second panel portion 100B separated from the first panel portion 100A. In the cutting step S1, the portion of the first flange portion 12a adjacent to the end portion of the weakened split portion 18 in the second panel portion 100B is cut in a manner similar to the cut form (shape) illustrated in Figure 10. Then, in the holding step S2, a portion on one side (for example, a portion on the second flange portion 12b side) of the second panel portion 100B with the weakened split portion 18 serving as a boundary is held. In the weakening step S3 and the breaking step S4, a portion on the other side (for example, a portion on the first flange portion 12a side) of the second panel portion 100B with the weakened split portion 18 serving as boundary is reciprocated a plurality of times about (with an origin of) the weakened split portion 18, and is turned to be folded back. Thus, the second panel portion 100B is broken at the weakened split portion 18. As a result, the second panel portion 100B is separated into dissimilar material component member pieces to which a plurality of dissimilar material members 20 and various components (X1, X2, and the like) are attached and triangular broken resin-molded pieces made of PP derived from the panel main body 10.

The broken resin-molded pieces of the second panel portion 100B are then pelletized, and distributed as a recycled PP material, similarly to the first panel portion 100A. The dissimilar material composite member pieces of the second panel portion 100B may be separated in a number of steps or may be subjected to an automobile shredder residue (ASR) process without being separated. When being separated, the dissimilar material composite member pieces of the second panel portion 100B are separated into a part derived from the panel main body 10, the dissimilar material members 20, and various components (X1, X2, and the like), and the part derived from the panel main body 10 is pelletized, and distributed as a recycled PP material. Although not illustrated, a mark of scissors or the like is preferably marked on a position to be cut in each of the first flange portion 12a and the second flange portion 12b so that the cutting position can be obvious. A procedure display portion indicating the procedure of the above-described disassembly method is preferably provided on the panel back surface 10a2 of the panel main body 10. In the procedure display portion, for example, the illustration showing the procedure of the disassembly method is directly marked on the panel main body 10. This enables a disassembly worker to easily understand the disassembly procedure and the disassembly method, so that the resin material recycling rate can be easily increased.

In the panel 100 according to the present embodiment, the panel main body 10 includes the weakened portion 15 provided to extend from one end side of the panel main body 10 to the other end side of the panel main body 10 in a predetermined direction along the panel surface 10a of the panel main body 10 (here, a direction parallel to the vehicle front-rear direction is referred to as a longitudinal direction). Accordingly, even when the panel main body 10 is a single large resin molded component when being manufactured and used, the large panel 100 is broken along the weakened portion 15 after being used when the vehicle is scrapped or the like, which makes it easy to disassemble the panel 100 with the weakened portion 15 serving as a boundary. As a result, when being manufactured while assuming the disassembly after the use, the panel main body 10 need not be formed by two resin molded components, thereby improving the work efficiency when the panel main body 10 is manufactured compared to a conventional structure, and the panel main body 10 can be easily separated after the use, thereby easily promoting the resin material recycling of the resin materials derived from the panel main body.

In the disassembly method for the panel 100 according to the present embodiment, in the holding step S2, a portion on the one side of the panel 100 with the weakened portion 15 serving as a boundary can be held, and in the breaking step S4, the weakened portion 15 can be broken. Accordingly, after being used when the vehicle is scrapped or the like, the large panel 100 held in the holding step S2 can be easily broken with an origin of the weakened portion 15 in the breaking step S4.

Thus, the panel 100 and the disassembly method for the panel 100 according to the present embodiment are the vehicle panel 100 and the disassembly method for the panel 100 which can easily promote resin material recycling without decreasing work efficiency when the panel is manufactured. The disassembly method for the panel 100 according to the present embodiment further includes the cutting step S1 of cutting a portion adjacent to the end portion of the weakened portion 15 in the edge portion on the one end side of the panel main body 10 and a portion adjacent to the end portion of the weakened portion 15 in the edge portion on the other end side of the panel main body 10, so that the panel 100 can be easily broken with an origin of the weakened portion 15 in the breaking step S4. The disassembly method for the panel 100 according to the present embodiment further includes the weakening step S3, so that the panel 100 can be easily broken in the breaking step S4.

In the present embodiment, the panel 100 is separated into the first panel portion 100A and the second panel portion 100B with the weakened portion 15 serving as a boundary, the first panel portion 100A is provided with the first protrusion portion 16 that protrudes from the panel surface 10a, the second panel portion 100B is provided with the second protrusion portion 17 that protrudes from the panel surface 10a, and the first protrusion portion 16 and the second protrusion portion 17 are located on the virtual circle W about the weakened portion 15. Accordingly, the first protrusion portion 16 is brought into contact with the second protrusion portion 17 when the panel 100 is bent about (with an origin of) the weakened portion 15, so that the stress by the bending force can be concentrated on the weakened portion 15, which makes it easy to break the weakened portion 15.

In the present embodiment, the interior corner portion 16b of one (here, the first protrusion portion 16) of the first protrusion portion 16 and the second protrusion portion 17 and the protruding end surface 17a at a distal end in the protruding direction of the other (here, the second protrusion portion 17) of the first protrusion portion 16 and the second protrusion portion 17 are located on the virtual circle W. Accordingly, when the panel 100 is bent, the interior corner portion 16b of one protrusion portion (16 or 17) can be brought into contact with the protruding end surface 17a of the other protrusion portion (17 or 16). As a result, the panel main body 10 can be easily turned about the interior corner portion 16b as a pivotal point, and the turning about the interior corner portion 16b as a pivotal point makes it possible to effectively apply, to the weakened portion 15, a force in the direction breaking the weakened portion 15.

In the present embodiment, the first panel portion 100A includes the first peripheral portion 10f extending from a proximal end portion of the first protrusion portion 16 to the weakened portion 15, the second panel portion 100B includes the second peripheral portion 10g extending from a proximal end portion of the second protrusion portion 17 to the weakened portion 15, and one (here, the second peripheral portion 10g) of the first peripheral portion 10f and the second peripheral portion 10g is bent in the panel thickness direction. This can reduce the deformation of one peripheral portion (10g) in the bending direction when the panel 100 is bent. As a result, it is possible to reduce the absorption of a part of the bending load input for bending as the energy for deforming the peripheral portion, which makes it easy to break the weakened portion 15 when the panel 100 is bent.

In the present embodiment, the rigidity in the protruding direction of one (here, the first protrusion portion 16) of the first protrusion portion 16 and the second protrusion portion 17 is set to be higher than the rigidity in the protruding direction of the other (here, the second protrusion portion 17) of the first protrusion portion 16 and the second protrusion portion 17. Accordingly, when the panel 100 is bent, it is easy to apply the force in the pulling direction for breaking the weakened portion 15 to the weakened portion 15 located between the first protrusion portion 16 and the second protrusion portion 17, so that the breakage of the weakened portion 15 is promoted.

In the present embodiment, the panel main body 10 includes the first flange portion 12a, the second flange portion 12b, and the main body portion 13 that connects the first flange portion 12a and the second flange portion 12b and bulges in the panel thickness direction, and the weakened portion 15 is formed in the main body portion 13. In the present embodiment, in the cutting step S1 of the disassembly method, a portion adjacent to the end portion of the weakened portion 15 in the first flange portion 12a and a portion adjacent to the end portion of the weakened portion 15 in the second flange portion 12b are cut. Accordingly, the strength required when the panel 100 is used can be easily ensured, and the breakage of the weakened portion 15 when the panel 100 is used can be reliably reduced.

In the present embodiment, the weakened portion 15 is formed into a thin shape having a thickness thinner than the thickness t of the panel around the weakened portion 15, and the portion on the design surface side (here, the interior design surface 10a1 side) of the weakened portion 15 is formed to be flat without roughness with respect to the design surface (here, the interior design surface 10a1) around the weakened portion 15. Accordingly, the roughness caused by the weakened portion 15 is not generated in the design surface 10a1 of the panel main body 10, which makes it possible to reduce the decrease in design of the design surface 10a1 and the influence of the design surface 10a1 on the appearance quality.

**In** the present embodiment, the panel main body 10 also includes the weakened split portion 18, which makes it easy to further divide the panel main body 10 around (with an origin of) the weakened split portion 18. Accordingly, after the use, the large panel main body 10 can be separated more easily and the resin material recycling of the resin materials derived from the panel main body can be promoted more easily.

**In** the present embodiment, the weakened portion 15 is provided to divide the panel main body 10 into the localized region V2 in which the dissimilar material members 20 are arranged and the delocalized region V1 on the opposite side of the localized region V2 side. Accordingly, the panel 100 is separated with the weakened portion 15 serving as a boundary, which makes it possible to disassemble the panel 100 into the delocalized region V1 in which the resin material recycling can be easily promoted and the localized region V2 in which time and efforts are required to promote the resin material recycling. As a result, the resin material recycling can be promoted more effectively and easily.

In the present embodiment, the weakened split portion 18 extends in a direction intersecting the weakened portion 15 at a position keeping away from the dissimilar material members 20 in the localized region V2 of the panel main body 10 to further divide the localized region V2. Accordingly, a portion of the localized region V2 (here, the second panel portion 100B) separated from the delocalized region V1 with the weakened portion 15 serving as a boundary can be further broken (separated) into a region on the dissimilar material member 20 side and a region on the opposite side of the dissimilar material members 20 with the weakened split portion 18 serving as a boundary. As a result, after the use, the disassembly work of the panel 100 for resin material recycling can be effectively performed and the recycling rate of the resin materials derived from the panel main body can be increased more easily.

In the example illustrated in the figure, the width of the second protrusion portion 17 in the direction along the weakened portion 15, the second protrusion portion 17 being provided in the second panel portion 100B to be held, is set to be longer than the width of the first protrusion portion 16 in the direction along the weakened portion 15, the first protrusion portion 16 being provided in the first panel portion 100A to be turned. Accordingly, when the first panel portion 100A is turned, the load transmitted from the first protrusion portion 16 to the second protrusion portion 17 can be distributed over a wide area via the second protrusion portion 17.

Here, in the first embodiment, a case in which the vehicle panel to be subjected to resin material recycling is an interior panel has been described as an example, but the present invention is not limited thereto, and, alternatively, the vehicle panel to be subjected to resin material recycling may be an exterior panel.

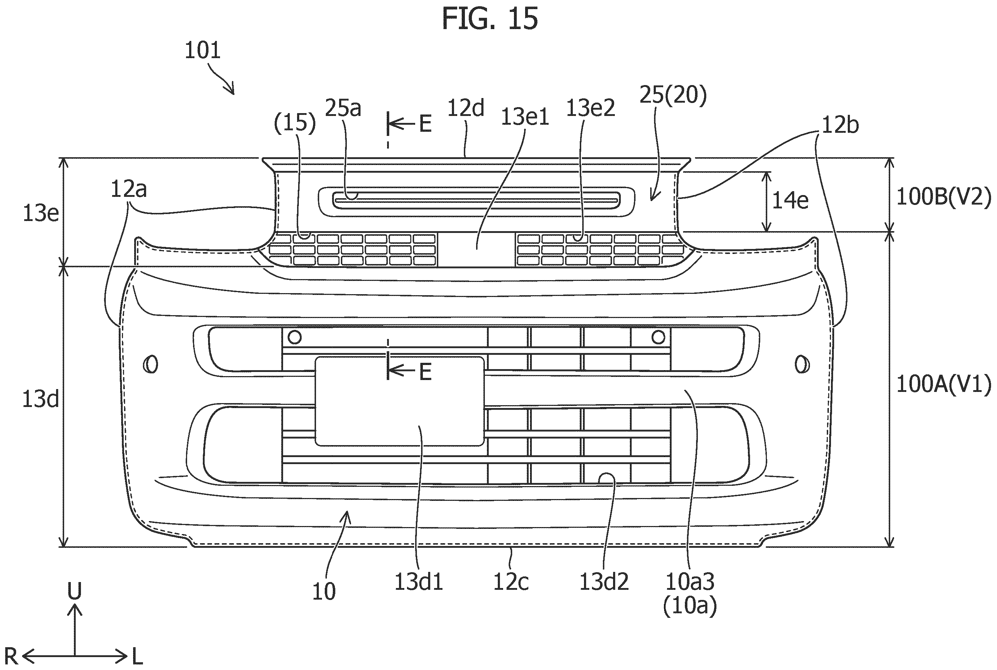

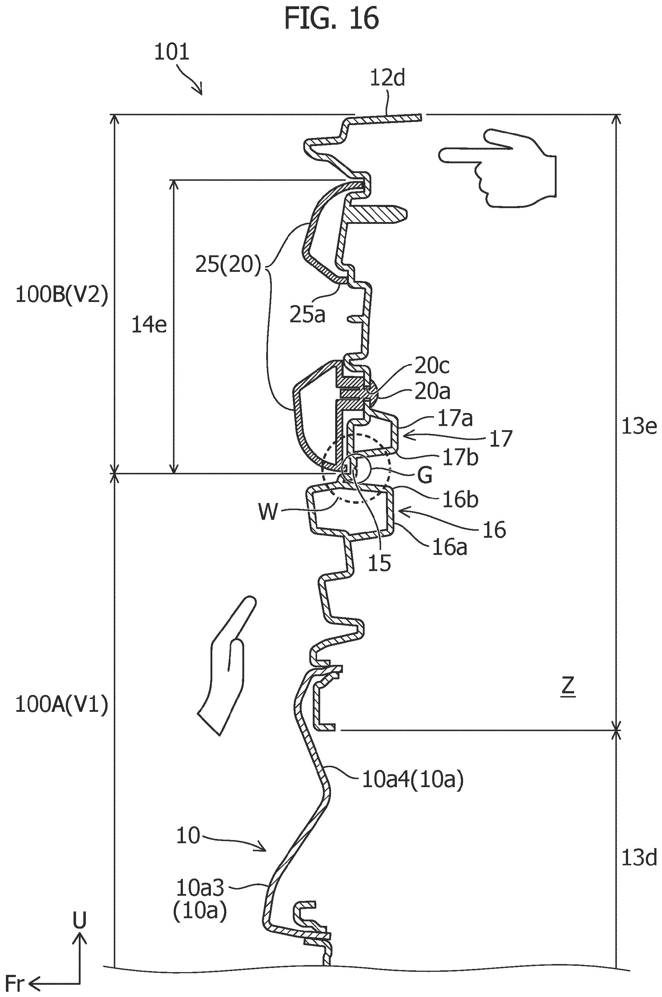

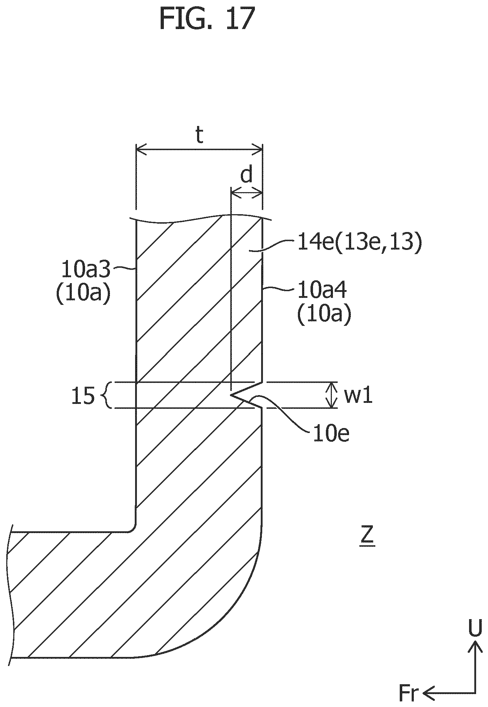

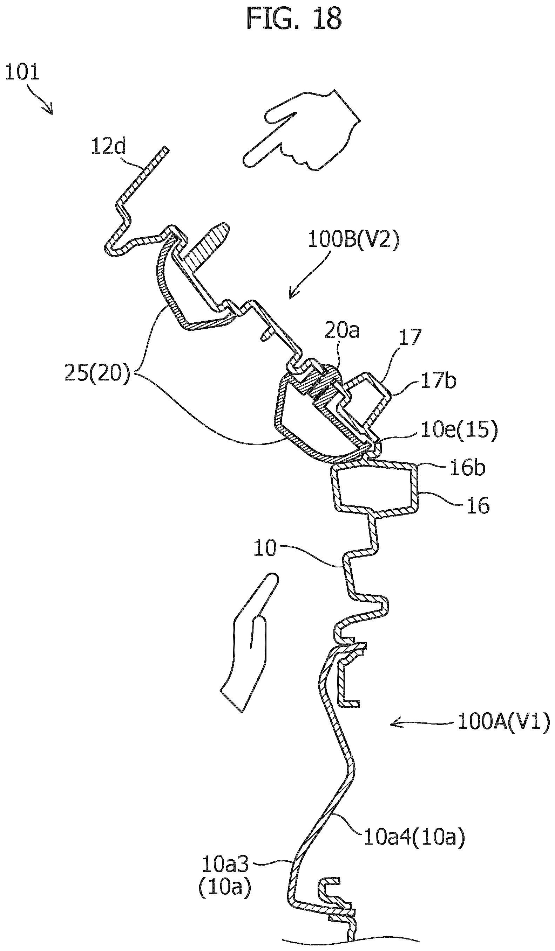

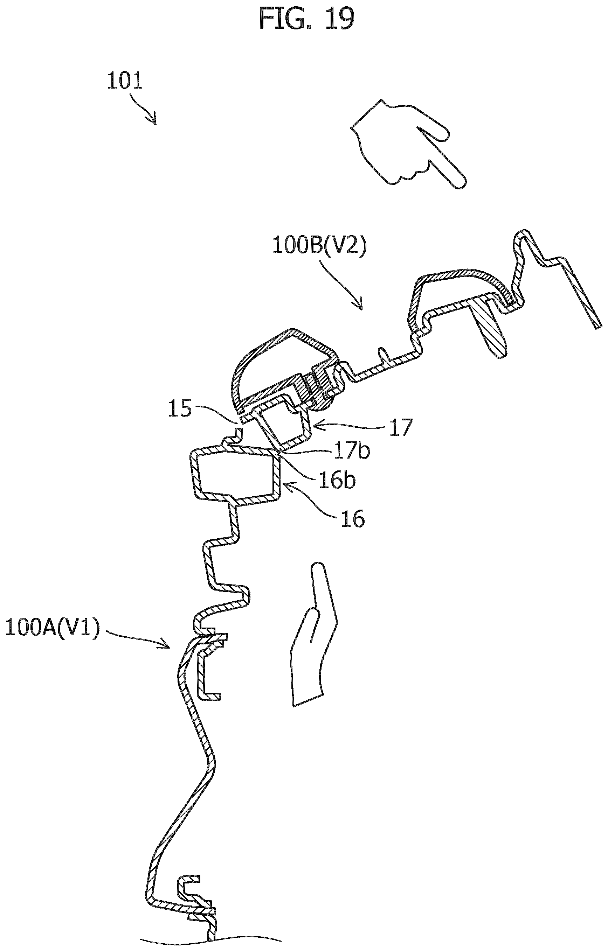

Next, a panel 101 as an exterior panel of the vehicle according to a second embodiment according to the present invention will be described with reference to Figures 15 to 19, and the like. Hereinafter, regarding the panel 101 which is the exterior panel and a disassembly method for the panel 101 according to the second embodiment, the same components as those of the panel 100 (interior panel) according to the first embodiment are denoted by the same reference numerals, and a configuration different from that of the interior panel will be mainly described. Figure 15 is a plan view of the panel 101 (exterior panel) according to the second embodiment as viewed from the front of a vehicle, Figure 16 is a partial cross-sectional view of the panel 101 taken along line E-E illustrated in Figure 15, Figure 17 is a partial cross-sectional view of the panel main body 10 in a portion G illustrated in Figure 16, Figure 18 is a cross-sectional view for illustrating a holding step S2 and a turning step S3 of the disassembly method for the panel 101 illustrated in Figure 15, and Figure 19 is a cross-sectional view illustrating a state of the disassembled panel 100 (exterior panel).

Referring to Figures 15 and 16, the panel 101 as the exterior panel includes the panel main body 10 facing the outside of the vehicle similarly to the panel 100, and is a large exterior component (exterior member) forming a part of the exterior design surface 10a3 which is the design surface outside the vehicle cabin Z of the vehicle. That is, the panel 101 is an exterior panel including the panel main body 10 having a surface forming the exterior design surface 10a3 which is a design surface outside the vehicle cabin Z of the vehicle. In the example illustrated in the figures, the panel 101 is a front bumper as an exterior member provided in the front of the vehicle.

The panel 101 includes the panel main body 10 and a dissimilar material member 20. The panel main body 10 is a large panel that faces the outside of the vehicle, occupies most of the panel 101, and is formed into a generally rectangular shape covering the entire a vehicle front portion as viewed in the vehicle front-rear direction. A surface facing the outside of the vehicle in the panel surface 10a of the panel 101 forms the exterior design surface 10a3, and a surface on the opposite side of the exterior design surface 10a3 in the panel surface 10a forms a panel back surface 10a4 facing the vehicle cabin interior. The panel main body 10 has a cutout in a portion on each of right and left sides in the upper portion corresponding to headlights, and a portion corresponding to each of right and left front wheels extends rearward of the vehicle.

The panel main body 10 of the panel 101 is, for example, a large resin molded component made of PP, similarly to the panel main body 10 of the panel 100. The dissimilar material member 20 is a member formed of a material different from that of the panel main body 10 (here, for example, ABS or PC), and in the example illustrated in the figures, the dissimilar material member 20 is attached to the upper portion of the panel main body 10. In the example illustrated in the figures, a fifth dissimilar material member 25 which is a decorative member as one of the dissimilar material members 20 is attached to the upper portion of the panel main body 10 from the outside of the vehicle.

The panel main body 10 of the panel 101 further includes an upper flange portion 12d in addition to a first flange portion 12a, a second flange portion 12b, a lower flange portion 12c, and a main body portion 13.

In the panel 101, the first flange portion 12a is a flange forming an edge portion on one end side in the panel main body 10 in a predetermined direction along the panel surface 10a of the panel main body 10, and the second flange portion 12b is a flange forming an edge portion on the other end side in the panel main body 10 in the predetermined direction along the panel surface 10a of the panel main body 10. In the second embodiment, the predetermined direction along the panel surface 10a corresponds to the vehicle width direction, and although not particularly limited to the following description, in the example illustrated in the figures, the first flange portion 12a is a part of the right edge portion of the panel main body 10, and the second flange portion 12b is a part of the left edge portion of the panel main body 10. The lower flange portion 12c protrudes rearward of the vehicle, and the upper flange portion 12d connects an upper end of the first flange portion 12a and an upper end of the second flange portion 12b and protrudes forward of the vehicle. The main body portion 13 extends in the vehicle width direction and the vehicle up-down direction, occupies most of the panel main body 10, and connects the first flange portion 12a, the second flange portion 12b, the lower flange portion 12c, and the upper flange portion 12d.

In the panel 101, the main body portion 13 is divided into a lower grille portion 13d that occupies most of the main body portion 13 and an upper grille portion 13e. The lower grille portion 13d includes a license plate attaching portion 13d1 to which a license plate is attached, and forms most of the main body portion 13. A plurality of lower grille holes 13d2 are opened in the lower grille portion 13d. For example, the upper grille portion 13e is provided to project upward from a center portion in the vehicle width direction in an upper edge portion of the lower grille portion 13d, and is formed into a generally rectangular shape that is long in the vehicle width direction in a plan view as viewed in the vehicle front-rear direction. The upper grille portion 13e includes a detection transmitted portion 13e1 configured to transmit a detection wave such as a millimeter wave for detecting the vehicle external environment. A plurality of upper grille holes 13e2 are opened in the upper grille portion 13e. The fifth attaching portion 14e to which the fifth dissimilar material member 25 is attached is formed in the upper grille portion 13e. The fifth attaching portion 14e is provided with engagement portions such as an engaging hole 20c for engaging with cylindrical fastening portions 20a and engaging lugs 20b that are formed in the fifth dissimilar material member 25.

In the example in the figures, the fifth dissimilar material member 25 of the panel 101 is attached to the upper grille portion 13e to cover a generally upper half in the exterior design surface 10a3 of the upper grille portion 13e. The fifth dissimilar material member 25 has a generally rectangular contour that is long in the vehicle width direction in a plan view as viewed in the vehicle front-rear direction, and is formed into an annular shape. A rectangular long hole 25a that is long in the vehicle width direction is opened in a center of the fifth dissimilar material member 25, and a part of the upper grille portion 13e is visually recognized from the front of the vehicle through the long hole 25a. Referring to Figure 16, the fifth dissimilar material member 25 is welded to the panel back surface 10a4 in a state in which the fastening portion 20a is inserted into the engaging hole 20c in the fifth attaching portion 14e, so that the fifth dissimilar material member 25 is joined to the panel main body 10.

Referring to Figures 15 to 17, the panel main body 10 of the panel 101 includes a weakened portion 15 that is provided to extend from one end side of the panel main body 10 to the other end side of the panel main body 10 in the predetermined direction along the panel surface 10a of the panel main body 10, similarly to the panel 100. In the second embodiment, the predetermined direction along the panel surface 10a corresponds to the vehicle width direction. Accordingly, the weakened portion 15 is provided to extend from the right end side of the panel main body 10 to the left end side of the panel main body 10. That is, the weakened portion 15 is provided to continuously or intermittently extend from a predetermined portion on the right end side of the panel main body 10 to a predetermined portion on the left end side of the panel main body 10. In the example illustrated in the figures, the weakened portion 15 extends linearly and continuously in the vehicle width direction at the height position corresponding to the upper grille portion 13e of the panel main body 10.

In the second embodiment, the weakened portion 15 is formed in the main body portion 13 of the panel main body 10, and is not formed in each flange portion (12a, 12b, 12c, 12d). The weakened portion 15 extends continuously and linearly from a front end of the upper grille portion 13e to a rear end of the upper grille portion 13e at the middle height position of the upper grille portion 13e in the vehicle up-down direction in the main body portion 13. The panel 101 is divided into a first panel portion 100A (lower portion) and a second panel portion 100B (upper portion) with the weakened portion 15 serving as a boundary. Although not particularly limited to the following description, here, the upper portion of the upper grille portion 13e in the panel 101 corresponds to the second panel portion 100B, and the lower portion of the upper grille portion 13e and the lower grille portion 13d in the panel 101 correspond to the first panel portion 100A.

In the second embodiment, the weakened portion 15 is disposed close to the exterior design surface 10a3 in the panel thickness direction. That is, a portion on the exterior design surface 10a1 side (in other words, the vehicle cabin exterior) of the weakened portion 15 is formed to be flat without roughness with respect to the exterior design surface 10a3 around the weakened portion 15. In the example illustrated in the figure, a bending promotion groove 10e is formed in the panel back surface 10a4 of the panel main body 10, so that the weakened portion 15 is formed into a thin shape having a thickness thinner than the thickness t of the panel around the weakened portion 15. Also in the second embodiment, in the example illustrated in the figure (see Figure 17), the bending promotion groove 10e is formed as a V-shaped groove having a V-shaped cross section, but the groove cross-sectional shape is not limited to V shape, and is formed into a suitable shape such as a U shape.

The weakened portion 15 of the panel 101 is provided to divide the panel main body 10 into a localized region V2 in which the fifth dissimilar material member 25 is arranged and a delocalized region V1 on the opposite side of the localized region V2 side. To be specific, the weakened portion 15 extends linearly to cross the panel main body 10 in the vehicle front-rear direction at the height position corresponding to the lower end of the fifth attaching portion 14e (in other words, the fifth dissimilar material member 25), thereby dividing the panel 101 (panel main body 10) into the first panel portion 100A and the second panel portion 100B. As a result, the weakened portion 15 of the panel 101 divides the panel main body 10 into the localized region V2 and the delocalized region V1.

Referring to Figure 16, in the second embodiment, a first protrusion portion 16 of the first panel portion 100A and a second protrusion portion 17 of the second panel portion 100B protrude outward in the panel thickness direction from the panel back surface 10a4 in the vicinity of the weakened portion 15. In the example illustrated in the figure, each protrusion portion (16, 17) is formed integrally with the panel main body 10 while having a trapezoidal contour. In the panel 101, the existing protrusion shape such as a clip seat and an air guide is used as each protrusion portion (16, 17), for example. In the example illustrated in the figure, an interior corner portion 16b of the first protrusion portion 16 and an interior corner portion 17b of the second protrusion portion 17 are located on the virtual circle W.

In the panel 101 configured as described above, the fifth dissimilar material member 25 is joined to the panel main body 10 by being welded to the panel main body 10 at the fastening portion 20a. Accordingly, much time and effort are required to detach the dissimilar material member 20 (fifth dissimilar material member 25) attached to the panel main body 10 in the second panel portion 100B from the panel main body 10. In contrast, the first panel portion 100A is formed only by the lower portion of the upper grille portion 13e and the lower grille portion 13d that are made of the same kind of resin (PP). Accordingly, from the viewpoint of workability of recycling of resin materials, the panel 101 is disassembled using the disassembly method which will be described below, and the first panel portion 100A is separated from the panel 101, so that the resin material recycling can be efficiently promoted.

To be specific, as in the first embodiment, the disassembly method for the panel 101 includes the cutting step S1, the holding step S2, the weakening step S3, and the breaking step S4 (see Figure 9). In the cutting step S1, a portion adjacent to the end portion of the weakened portion 15 in the first flange portion 12a of the panel 101 and a portion adjacent to the end portion of the weakened portion 15 in the second flange portion 12b of the panel 101 are cut. As illustrated in Figures 16 and 18, in the holding step S2, the first panel portion 100A (in other words, the delocalized region V1 in the panel main body 10) is held at a predetermined position in the example illustrated in the figure. In the weakening step S3, the second panel portion 100B (in other words, the localized region V2 in the panel main body 10) is turned about (with an origin of) the weakened portion 15 in the example illustrated in the figure. In the example illustrated in the figures, in the weakening step S3, the second panel portion 100B is reciprocated a plurality of times with an origin of the weakened portion 15 and is folded back to further weaken the weakened portion 15, and in the breaking step S4, the second panel portion 100B is turned to break the weakened portion 15. To be specific, in the breaking step S4, the second panel portion 100B is turned in the direction approaching the panel back surface 10a4 of the first panel portion 100A, and the interior corner portion 17b of the second protrusion portion 17 is brought into contact with the interior corner portion 16b of the first protrusion portion 16. In this contact state, the second panel portion 100B is further turned about the interior corner portion 16b as a pivotal point, so that a force for breaking the weakened portion 15 is generated by the principle of leverage. Then, in the example illustrated in Figure 19, the panel 101 is broken at the weakened portion 15, and the panel 101 is divided into the first panel portion 100A and the second panel portion 100B. Thus, the panel 101 is separated into the first panel portion 100A made of PP and the second panel portion 100B made of a plurality of materials. The first panel portion 100A is then pelletized, and distributed as a recycled PP material, and the second panel portion 100B may be separated in a number of steps or may be subjected to an automobile shredder residue (ASR) process without being separated.

The embodiments of the present invention have been described above, but the present invention is not limited to the above-described first and second embodiments, and further variations and modifications can be made based on the technical concept of the present invention.

For example, each of the weakened portion 15 of each embodiment and the weakened split portion 18 of the first embodiment extends continuously, but without limitation to this configuration, it may extend intermittently. Each of the weakened portion 15 and the weakened split portion 18 extends linearly in one direction, but without limitation to this configuration, it may be curved, bent, or extend with a combination of curving, bending and linear extension.

The portion on the design surface side (interior design surface 10a1 side or exterior design surface 10a3 side) of the weakened portion 15 is formed to be flat without roughness with respect to the design surface (interior design surface 10a1 or exterior design surface 10a3) around the weakened portion 15, but without limitation to this configuration, it may be recessed with respect to the design surface (10a1, 10a3) around the weakened portion 15. In this case, a portion on the vehicle cabin exterior of the weakened portion 15 may be formed to be flat without roughness with respect to the vehicle cabin exterior surface around the weakened portion 15 (panel back surface 10a2 or panel back surface 10a4) or to be recessed.

In the first embodiment, the first protrusion portion 16 may be formed separately from the panel main body 10 and the second protrusion portion 17 may be formed integrally with the panel main body 10. In the second embodiment, at least one of the first protrusion portion 16 and the second protrusion portion 17 may be formed separately from the panel main body 10.

In each embodiment, when the panel main body 10 is bent about the weakened portion 15, and the first protrusion portion 16 and the second protrusion portion 17 contact each other, the first protrusion portion 16 and the second protrusion portion 17 protrude in a direction intersecting each other, but the present invention is not limited thereto. When the panel main body 10 is bent about the weakened portion 15, and the first protrusion portion 16 and the second protrusion portion 17 contact each other, the first protrusion portion 16 and the second protrusion portion 17 may protrude in respective directions opposite to each other. In this case, when the panel is bent, the protruding end surface 16a of the first protrusion portion 16 and the protruding end surface 17a of the second protrusion portion 17 are brought into surface contact with each other, so that the pulling force in the direction breaking the weakened portion 15 can be effectively applied to the weakened portion 15. As a result, the weakened portion 15 is easily broken when the panel is bent.

In the first embodiment, the weakened split portion 18 extends from a predetermined intermediate position of the weakened portion 15 in the longitudinal direction toward a predetermined portion side of an outer edge of the panel main body 10, but without limitation to this configuration, it may extend from the periphery of the predetermined intermediate position of the weakened portion 15 in the longitudinal direction. That is, the end portion on the weakened portion 15 side of the weakened split portion 18 need not be connected to the weakened portion 15, and may extend toward the outer edge of the panel main body 10 with the vicinity of the periphery of the weakened portion 15 as a starting point. In the first embodiment, the width of the second protrusion portion 17 may be shorter than the width of the first protrusion portion 16, or may be the same as the width of the first protrusion portion 16. In the first embodiment, the protruding length of the first protrusion portion 16 may be longer than the protruding length of the second protrusion portion 17, or may be the same as the protruding length of the second protrusion portion 17. In the second embodiment, the protruding length of the first protrusion portion 16 may be shorter than the protruding length of the second protrusion portion 17, or may be the same as the protruding length of the second protrusion portion 17.

In each embodiment, the dissimilar material member 20 may be provided not in the second panel portion 100B, but in the first panel portion 100A. The panel 100 which is the interior panel is not limited to the door trim, and may be another interior panel such as a roof trim or a side trim around the door. The panel 101 which is the exterior pane is not limited to the front bumper with a grille, and may be another exterior panel such as a front bumper without a grille or a rear bumper.

Also in this case, regarding the panel 100 as the interior panel and the panel 101 as the exterior panel, the recycling of the resin materials can be promoted by the weakened portion 15.

In the disassembly method for the panel 100, the holding step S2 holds the first panel portion 100A, and the weakening step S3 and the breaking step S4 may turn the second panel portion 100B. In the disassembly method for the panel 101, the holding step S2 holds the second panel portion 100B, and the weakening step S3 and the breaking step S4 may turn the first panel portion 100A. In the weakening step S3, the weakened portion 15 may be weakened by pulling without limitation to turning, and also in the breaking step S4, the weakened portion 15 may be broken by pulling without limitation to turning. To be specific, in the weakening step S3 and the breaking step S4, at least one of the first panel portion 100A and the second panel portion 100B may be pulled in a direction pulling the first panel portion 100A away from the second panel portion 100B. In this case, the vicinity of both sides of the cutout formed in the cutting step S1 is preferably pulled. In the weakening step S3, a load or an external force is applied directly to the periphery of the weakened portion 15 without limitation to turning and pulling, so that the weakened portion 15 may be further weakened.

The panel (100, 101) need not have the first protrusion portion 16 and the second protrusion portion 17. In this case, the disassembly method preferably includes a high rigidity member disposing step before or during execution of the weakening step S3 and the breaking step S4. In the high rigidity member disposing step, a high rigidity member in a massive form or a box shape having rigidity greater than that of the panel main body 10 is disposed to contact the panel back surface (10a2, 10a4) to extend along the weakened portion 15 from the panel back surface (10a2, 10a4) side. In this contact state, the first panel portion 100A or the second panel portion 100B is turned about a corner portion of the high rigidity member as a pivotal point, so that a force for breaking the weakened portion 15 is generated by the principle of leverage, which makes it easy to break the weakened portion 15.

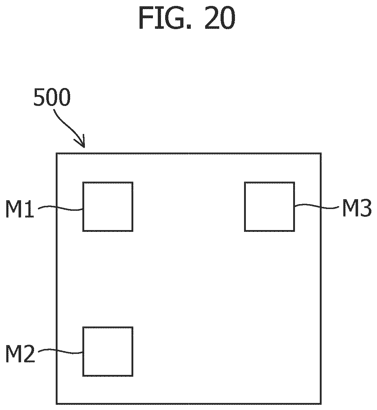

In each embodiment, the cutting step S1, the holding step S2, the weakening step S3, and the breaking step S4 are executed manually by a worker, but without limitation to this configuration, they may be executed by a separation device 500 including a plurality of robots (M1, M2, and M3) as illustrated in Figure 20. To be specific, for example, the cutting step S1 may be executed by the cutting robot M1 that can execute by laser cutting or physical cutting with a cutting machine and the holding robot M2 having arms that can execute the holding operation of grasping or pressing to hold the panel (100, 101), the holding step S2 may be executed by the holding robot M2, the weakening step S3 and the breaking step S4 may be executed by the turning robot M3 having a grasping portion that can execute the operation of grasping and turning the panel (100, 101) or pulling the panel (100, 101). The separation device 500 may be a semi-automatic device that executes a part of the steps (S1, S2, S3, and S4) with the robots and the remaining steps by a worker's operation. When the weakened portion 15 can be easily broken in the breaking step S4, the disassembly method need not include at least one of the cutting step S1 and the weakening step S3. The holding step S2 may be executed after the cutting step S1.

By focusing attention on the weakening and breaking, the disassembly method for the vehicle panel (100, 101) according to embodiments is a disassembly method for a vehicle panel including the panel main body 10 having a surface forming a design surface in the vehicle cabin Z of the vehicle or outside of the vehicle cabin Z of the vehicle, characterized in that the panel main body 10 includes the weakened portion 15 provided to extend from one end side of the panel main body 10 to the other end side of the panel main body 10 in a predetermined direction along the panel surface 10a of the panel main body 10, the disassembly method including the weakening step S3 of further weakening the weakened portion 15 of the panel (100, 101), and the breaking step S4 of breaking the weakened portion 15 further weakened in the weakening step S3.

### [Reference Signs List]

- 10: Panel main body
- 10a: Panel surface
- 10a1: Interior design surface (design surface of vehicle cabin interior)
- 10a2: Panel back surface
- 10a3: Exterior design surface (design surface of vehicle cabin exterior)
- 10a4: Panel back surface
- 10b: Lower speaker disposing portion
- 10c: Lower interior wall
- 10d1: Fastening portion
- 10d2: Engaging lug
- 10e: Bending promotion groove
- 10f: First peripheral portion
- 10g: Second peripheral portion
- 11: Extending bulged portion
- 12a: First flange portion
- 12b: Second flange portion
- 12c: Lower flange portion
- 13: Main body portion
- 13a: First vertical wall
- 13b: Second vertical wall
- 13c: Main body wall
- 14a: First attaching portion
- 14a1: Handle hole
- 14b: Second attaching portion
- 14c: Third attaching portion
- 14c1: Middle opening
- 14d: Fourth attaching portion
- 14d1: Front opening
- 15: Weakened portion
- 16: First protrusion portion
- 16a: Protruding end surface
- 16b: Interior corner portion
- 16c: Reinforcement rib
- 17: Second protrusion portion
- 17a: Protruding end surface
- 17b: Interior corner portion
- 18: Weakened split portion
- 19a: Lower grille portion
- 19a1: License plate attaching portion
- 19a2: Lower grille hole
- 19b: Upper grille portion
- 19b1: Detection wave transmitted portion
- 19b2: Upper grille hole
- 19b3: Upper flange portion
- 19b4: Third flange portion
- 19b5: Fourth flange portion
- 20: Dissimilar material member
- 20a: Fastening portion
- 20b: Engaging lug
- 21: First dissimilar material member
- 21a: Upper storage receptacle for articles
- 22: Second dissimilar material member
- 23: Third dissimilar material member
- 23a: Middle storage receptacle for articles
- 23b: Operation panel
- 24: Fourth dissimilar material member
- 30: Article storage pocket
- 30a: Pocket opening
- 30b: Pocket bulged portion
- 40: Pocket forming member
- 40a: Flange
- 100: Panel
- 101: Panel
- 100A: First panel portion
- 100B: Second panel portion
- X1: Inside door handle
- X2: Upper speaker
- X3: Operation portion
- X3a: Operation switch
- X3b: Support case
- V1: Delocalized region
- V2: Localized region
- W: Virtual circle
- w1: Groove width
- d: Groove depth
- t: Panel thickness
- Z: Vehicle cabin

## Claims

1. A vehicle panel comprising a panel main body having a surface forming a vehicle cabin interior or exterior design surface of a vehicle, **characterized in that**
the panel main body includes a weakened portion provided to extend from one end side of the panel main body to the other end side of the panel main body in a predetermined direction along a panel surface of the panel main body.

2. The vehicle panel according to claim 1, wherein
the panel is divided into a first panel portion and a second panel portion with the weakened portion serving as a boundary,
the first panel portion is provided with a first protrusion portion that protrudes from the panel surface,
the second panel portion is provided with a second protrusion portion that protrudes from the panel surface, and
the first protrusion portion and the second protrusion portion are located on a virtual circle about the weakened portion.

3. The vehicle panel according to claim 1, wherein
the panel main body is divided into a first panel portion and a second panel portion with the weakened portion serving as a boundary, and
The first panel portion or the second panel portion is provided with a protrusion portion that protrudes from the panel surface.

4. The vehicle panel according to claim 2, wherein
an interior corner portion on a distal end side in a protruding direction and a weakened portion side of one of the first protrusion portion and the second protrusion portion and a protruding end surface of a distal end in a protruding direction of the other of the first protrusion portion and the second protrusion portion are located on the virtual circle.

5. The vehicle panel according to claim 2, wherein
when the panel main body is bent about the weakened portion and the first protrusion portion and the second protrusion portion contact each other, the first protrusion portion and the second protrusion portion protrude in respective directions opposite to each other.

6. The vehicle panel according to claim 2, wherein
the first panel portion includes a first peripheral portion extending from a proximal end portion of the first protrusion portion to the weakened portion,
the second panel portion includes a second peripheral portion extending from a proximal end portion of the second protrusion portion to the weakened portion, and
one of the first peripheral portion and the second peripheral portion is bent in a panel thickness direction.

7. The vehicle panel according to claim 2, wherein
a rigidity in a protruding direction of one of the first protrusion portion and the second protrusion portion is set to be higher than a rigidity in a protruding direction of the other of the first protrusion portion and the second protrusion portion.

8. The vehicle panel according to claim 1, wherein
the panel main body includes a first flange portion that forms an edge portion on the one end side in the panel main body, a second flange portion that forms an edge portion on the other end side in the panel main body, and a main body portion that connects the first flange portion and the second flange portion, and
the weakened portion is formed in the main body portion.

9. The vehicle panel according to claim 1, wherein
the weakened portion is formed into a thin shape having a thickness thinner than a thickness of the panel around the weakened portion, and
a portion on a design surface side of the weakened portion is formed to be flat without roughness with respect to the design surface around the weakened portion.

10. The vehicle panel according to claim 1, wherein
the panel main body includes a weakened split portion extending from a predetermined intermediate position of the weakened portion in a longitudinal direction or a periphery of the intermediate position toward a predetermined portion side of an outer edge of the panel main body.

11. The vehicle panel according to claim 1, further comprising:
a dissimilar material member formed of a material different from a material of the panel main body, the dissimilar material member being arranged in a localized region in the panel main body,
wherein the weakened portion is provided to divide the panel main body into a localized region in which the dissimilar material member is arranged and a delocalized region on the opposite side of the localized region side.

12. The vehicle panel according to claim 11, wherein
the panel main body includes a weakened split portion extending from a predetermined intermediate position of the weakened portion in a longitudinal direction or a periphery of the intermediate position toward a predetermined portion side of an outer edge of the panel main body, and
the weakened split portion extends in a direction intersecting the weakened portion at a position keeping away from the dissimilar material member in the localized region of the panel main body to further divide the localized region.

13. A disassembly method for a vehicle panel comprising a panel main body having a surface forming a vehicle cabin interior or exterior design surface of a vehicle, **characterized in that**
the panel main body includes a weakened portion provided to extend from one end side of the panel main body to the other end side of the panel main body in a predetermined direction along a panel surface of the panel main body,
the disassembly method, comprising:
a holding step of holding a portion on one side of the panel with the weakened portion serving as a boundary; and
a breaking step of breaking the weakened portion.

14. The disassembly method for a vehicle panel according to claim 13, further comprising:
a cutting step of cutting a portion adjacent to an end portion of the weakened portion in an edge portion on the one end side of the panel main body and a portion adjacent to an end portion of the weakened portion in an edge portion on the other end side of the panel main body.

15. The disassembly method for a vehicle panel according to claim 14, wherein
the panel main body includes a first flange portion that forms the edge portion on the one end side in the panel main body, a second flange portion that forms the edge portion on the other end side in the panel main body, and a main body portion that connects the first flange portion and the second flange portion and bulges in a panel thickness direction,
the weakened portion is formed in the main body portion, and
the cutting step cuts a portion adjacent to an end portion of the weakened portion in the first flange portion and a portion adjacent to an end portion of the weakened portion in the second flange portion.
